# EUROPEAN PATENT APPLICATION

(11) **EP 4 794 026 A1**
(43) Date of publication of application: **19.08.2026**
(21) Application number: 24878434.0
(22) Date of filing: 08.05.2024
(51) Int. Cl.: H01M 4/505, H01M 4/525

(54) **POSITIVE ELECTRODE ACTIVE MATERIAL AND PREPARATION METHOD THEREFOR, POSITIVE ELECTRODE SHEET, SECONDARY BATTERY, AND ELECTRIC DEVICE**

(30) Priority: 16.10.2023 CN 202311331958
(71) Applicant: Contemporary Amperex Technology Co., Limited, Ningde, Fujian 352100 (CN)
(72) Inventor: ZHANG, Zhenguo, Ningde, Fujian 352100 (CN); LIN, Wenzhong, Ningde, Fujian 352100 (CN); FAN, Jingpeng, Ningde, Fujian 352100 (CN); WANG, Sihui, Ningde, Fujian 352100 (CN); WU, Qi, Ningde, Fujian 352100 (CN); LIU, Na, Ningde, Fujian 352100 (CN)
(74) Representative: Gong, Jinping
(86) International application number: PCT/CN2024/091780
(87) International publication number: WO 2025/081781

(57) **Abstract**

The present application relates to a positive electrode active material and a preparation method therefor, a positive electrode sheet, a secondary battery, and an electric device. The positive electrode active material comprises an active substance; the active substance comprises a lithium nickel manganese oxide; the lithium nickel manganese oxide comprises a spinel phase; in an X-ray diffraction analysis pattern of the lithium nickel manganese oxide, there is a first diffraction peak at a diffraction angle 2θ of 18° to 19° and a second diffraction peak at a diffraction angle 20 of 44° to 45°; the first diffraction peak corresponds to a crystal face (111), and the second diffraction peak corresponds to a crystal face (400); the peak intensity of the first diffraction peak is I₍₁₁₁₎, the peak intensity of the second diffraction peak is I₍₄₀₀₎, and I₍₁₁₁₎ and I₍₄₀₀₎ satisfy: 2.5 ≤ I₍₁₁₁₎/I₍₄₀₀₎ ≤ 4.0; and the lithium nickel manganese oxide satisfies the chemical formula LiₓM_{y}Ni_{z}Mn_{2-y-z}O₄₋ₖ, wherein 0.8 ≤ x ≤ 1.05, 0 ≤ y ≤ 0.2, 0.3 ≤ z ≤ 0.7, -0.1 ≤ k ≤ 0.5, and M comprises one or more of B, Si, P, S, Nb, Mo, Ru, Te, Ce, Ta, and W.

## Description

### CROSS-REFERENCE TO RELATED APPLICATIONS

The present application claims priority to Chinese Patent Application No. 202311331958.4 filed on October 16, 2023 and entitled "POSITIVE ELECTRODE ACTIVE MATERIAL AND PREPARATION METHOD THEREFOR, POSITIVE ELECTRODE SHEET, SECONDARY BATTERY, AND ELECTRIC DEVICE", which is incorporated herein by reference in its entirety.

### TECHNICAL FIELD

The present application relates to the field of battery technologies, and in particular relates to a positive electrode active material and a preparation method therefor, a positive electrode sheet, a secondary battery, and an electric device.

### BACKGROUND

The statements herein merely provide background information related to the present application and do not necessarily constitute prior art.

In recent years, with the application range of secondary batteries represented by lithium-ion batteries becoming increasingly widespread, secondary batteries are widely used in energy storage power systems such as hydraulic, thermal, wind, and solar power stations, as well as in multiple fields such as electric tools, electric bicycles, electric motorcycles, electric vehicles, military equipment, and aerospace. As secondary batteries have undergone significant development, higher requirements have also been imposed on their cycling performance and storage performance.

### SUMMARY

The present application provides a positive electrode active material and a preparation method therefor, a positive electrode sheet, a secondary battery, and an electric device, which can improve the storage performance of the secondary battery.

To achieve the above object, a first aspect of the present application provides a positive electrode active material, including an active substance, where the active substance includes a lithium nickel manganese oxide, the lithium nickel manganese oxide includes a spinel phase, an X-ray diffraction pattern of the lithium nickel manganese oxide has a first diffraction peak at a diffraction angle 2θ of 18° to 19° and a second diffraction peak at a diffraction angle 2θ of 44° to 45°, the first diffraction peak corresponds to a crystal plane (111), and the second diffraction peak corresponds to a crystal plane (400); and a peak intensity of the first diffraction peak being I₍₁₁₁₎, a peak intensity of the second diffraction peak being I₍₄₀₀₎, and I₍₁₁₁₎ and I₍₄₀₀₎ satisfy 2.5≤I₍₁₁₁₎/I₍₄₀₀₎≤4.

The positive electrode active material provided in the present application includes a lithium nickel manganese oxide containing a spinel phase. By controlling I₍₁₁₁₎/I₍₄₀₀₎ within the above range, the degree of preferred orientation of the (111) plane can be improved, thereby improving the stacking quality of the (111) plane, thereby improving the stability of the spinel phase. A more stable spinel phase indicates a slower dissolution of transition metal ions (such as manganese ions) in the lithium nickel manganese oxide and a slower capacity loss rate of the negative electrode and the battery, which helps to improve the storage performance of the battery.

In some embodiments of the present application, the lithium nickel manganese oxide satisfies 2.8≤I₍₁₁₁₎/I₍₄₀₀₎≤3.8.

In some embodiments of the present application, the lithium nickel manganese oxide satisfies 3.1≤I₍₁₁₁₎/I₍₄₀₀₎≤3.6.

When I₍₁₁₁₎/I₍₄₀₀₎ is within the above range, it helps to further improve the stability of the spinel structure, thereby further reducing the dissolution of transition metal ions (such as manganese ions) in the lithium nickel manganese oxide, and thus further improving the storage performance of the battery.

In some embodiments of the present application, the lithium nickel manganese oxide satisfies a chemical formula LiₓM_{y}Ni_{z}Mn_{2-y-z}O₄₋ₖ, where 0.8≤x≤1.05, 0≤y≤0.2, 0.3≤z≤0.7, - 0.1≤k≤0.5, and M includes one or more of B, Si, P, S, Nb, Mo, Ru, Te, Ce, Ta, and W.

When the lithium nickel manganese oxide satisfies the above chemical formula, and the content x of the lithium element is within the above range, it can not only enhance the degree of preferred orientation of the (111) plane in the spinel structure and improve the stability of the spinel structure, but also ensure the proportion of active lithium ions in the lithium nickel manganese oxide and the diffusion channels of the active lithium ions, so that the positive electrode active material has sufficient cycling activity.

In some embodiments of the present application, the lithium nickel manganese oxide satisfies at least one of the following conditions: $0.85 \leq x \leq 1.02 ;$ and $0.01 \leq y \leq 0.2 .$

In some embodiments of the present application, the lithium nickel manganese oxide satisfies at least one of the following conditions: $0.9 \leq x \leq 0.99 ;$ and $0.02 \leq y \leq 0.1 .$

In the above chemical formula, when the content of the element M is within the above range, on the one hand, while ensuring a relatively high lithium content, it can also maintain I₍₁₁₁₎/I₍₄₀₀₎ at a relatively high level, thereby improving the degree of preferred orientation of the (111) plane in the spinel structure and improving the stability of the spinel structure. On the other hand, since the element M itself cannot exhibit variable valence and will occupy and reduce the proportion of active lithium ions in the lithium nickel manganese oxide, controlling the content of the element M within the above range can ensure that the positive electrode active material has sufficient cycling activity.

In some embodiments of the present application, the lithium nickel manganese oxide includes a rock salt phase, where an X-ray diffraction pattern of the lithium nickel manganese oxide has a third diffraction peak at a diffraction angle 2θ of 43° to 44°, a peak intensity of the third diffraction peak is I_{RS}, and I_{RS} and I₍₄₀₀₎ satisfy 0.01≤I_{RS}/I₍₄₀₀₎≤0.2.

The lithium nickel manganese oxide includes a rock salt phase, and the nickel in the rock salt phase is stable low-valence nickel. By controlling I_{RS}/I₍₄₀₀₎ within the above range, that is, controlling the rock salt phase content within the above range, it can effectively reduce the oxidative decomposition of the electrolyte caused by high-valence nickel formed by detachment from the spinel phase, thereby reducing the oxidation of the electrolyte.

In some embodiments of the present application, I_{RS} and I₍₄₀₀₎ satisfy 0.02≤I_{RS}/I₍₄₀₀₎≤0.1.

In some embodiments of the present application, I_{RS} and I₍₄₀₀₎ satisfy 0.05≤I_{RS}/I₍₄₀₀₎≤0.1.

When I_{RS}/I₍₄₀₀₎ is within the above range, it helps to further reduce the oxidative decomposition of the electrolyte and further reduce the dissolution of transition metal ions in the spinel phase, thereby further improving the storage performance of the battery.

In some embodiments of the present application, the lithium nickel manganese oxide satisfies the following condition: 3.5≤(I₍₁₁₁₎+10×I_{RS})/I₍₄₀₀₎≤4.4.

In some embodiments of the present application, the lithium nickel manganese oxide satisfies the following condition: 3.6≤(I₍₁₁₁₎+10×I_{RS})/I₍₄₀₀₎≤4.1.

In the lithium nickel manganese oxide, by controlling (I₍₁₁₁₎+10×I_{RS})/I₍₄₀₀₎ within the above range, it helps to reduce the adverse effects of the spinel phase and the rock salt phase on the material capacity and kinetics, thereby improving the capacity and kinetic performance of the material and the battery.

In some embodiments of the present application, the lithium nickel manganese oxide includes crystal grains of the spinel phase and crystal grains of the rock salt phase, and the crystal grains of the rock salt phase cover at least part of the surface of the crystal grains of the spinel phase in the form of a rock salt phase layer.

The lithium nickel manganese oxide includes crystal grains of the spinel phase and crystal grains of the rock salt phase, where the crystal grains of the spinel phase provide a bulk phase structure for the lithium nickel oxide, and the bulk phase structure has relatively high stability, which can slow down the dissolution of transition metal ions in the lithium nickel manganese oxide; while the crystal grains of the rock salt phase can reduce the oxidative decomposition of the electrolyte by high-valence nickel formed by detachment from the spinel phase, thereby reducing the oxidation of the electrolyte.

In some embodiments of the present application, a thickness of the rock salt phase layer is 20 nanometers (nm) to 200 nm.

When the thickness of the rock salt phase layer is within the above range, long life and capacity can be balanced while improving the storage performance of the battery.

In some embodiments of the present application, the active substance further includes a phosphate, a mass percentage of the phosphate in the active substance being m, 0.2%≤m≤20%.

In the active substance, the phosphate ions in the phosphate can preferentially capture HF formed by oxidative decomposition of the electrolyte, reducing the corrosion of the positive electrode active material caused by the electrolyte. In addition, they can also capture transition metal ions, inhibiting the dissolution of transition metal ions in the lithium nickel manganese oxide, thereby improving the storage performance of the battery.

In some embodiments of the present application, the positive electrode active material satisfies at least one of the following conditions:
(1) m satisfies 0.5%≤m≤10%;
(2) the phosphate is coated on at least part of a surface of the lithium nickel manganese oxide; and
(3) the phosphate includes at least one of orthophosphates, hydrogen phosphates, dihydrogen phosphates, metaphosphates, pyrophosphates, polyphosphates, hypophosphates, phosphites, monofluorophosphates, difluorophosphates, and trifluorophosphates containing at least one element of Li, Na, K, Mg, Al, Ti, Zr, La, Ta, Nb, Te, Mo, W, Sb, Ni, Mn, Fe, Co, and N.

When the phosphate is coated on at least part of a surface of the lithium nickel manganese oxide, it can effectively exert the aforementioned effect of the phosphate in the active substance without affecting the phase structure (spinel phase and rock salt phase) of the lithium nickel manganese oxide.

In some embodiments of the present application, the active substance includes particles of the active substance, the particles of the active substance include at least one of single crystal grains and quasi-single crystal grains, and the single crystal grains include at least one of truncated octahedral grains and spherical grains.

In the particles of the active substance, the rock salt phase is mainly distributed on the particle surface, so when the particles of the active substance include single crystal grains and/or quasi-single crystal grains, each surface of the single crystal grains or quasi-single crystal grains will have more rock salt phase distributed, which helps more to improve the long-term stability of the positive electrode active material and the battery.

In some embodiments of the present application, the positive electrode active material satisfies at least one of the following conditions:
(1) a compaction density P of the positive electrode active material under 6 tons of pressure satisfies P≥3 grams per cubic centimeter (g/cm³);
(2) a volume average particle diameter Dv50 of the positive electrode active material satisfies 2 micrometers (µm)≤Dv50≤20 µm;
(3) volume average particle diameters Dv50, Dv90, and Dv10 of the positive electrode active material satisfy 0.8≤(Dv90-Dv10)/Dv50≤2;
(4) a specific surface area S of the positive electrode active material satisfies 0<S≤1 square meter per gram (m²/g); and
(5) a pH value of the positive electrode active material satisfies 9≤pH≤12.

In some embodiments of the present application, the positive electrode active material satisfies at least one of the following conditions:
(1) a compaction density P of the positive electrode active material under 6 tons of pressure satisfies 3 g/cm³≤P≤3.5 g/cm³;
(2) a volume average particle diameter Dv50 of the positive electrode active material satisfies 3 µm≤Dv50≤15 µm;
(3) volume average particle diameters Dv50, Dv90, and Dv10 of the positive electrode active material satisfy 1.0≤(Dv90-Dv10)/Dv50≤1.8;
(4) a specific surface area S of the positive electrode active material satisfies 0<S≤0.7 m²/g;
(5) a pH value of the positive electrode active material satisfies 10≤pH≤12.

When the compaction density of the positive electrode active material of the present application is within the above relatively high range, it can make the material particles have a morphology more conducive to dense packing, so the pressure required to achieve the same compaction is smaller, and the particles are less likely to break, thereby reducing the risk of particle cracking and reducing the occurrence of side reactions and dissolution of transition metal ions caused by particle cracking.

A second aspect of the present application further provides a method for preparing a positive electrode active material, including:
sintering a mixture including a lithium source, a nickel source, and a manganese source to obtain a positive electrode active material;
where the positive electrode active material includes an active substance, the active substance includes a lithium nickel manganese oxide, the lithium nickel manganese oxide includes a spinel phase, an X-ray diffraction pattern of the lithium nickel manganese oxide has a first diffraction peak at a diffraction angle 2θ of 18° to 19° and a second diffraction peak at a diffraction angle 2θ of 44° to 45°, the first diffraction peak corresponds to a crystal plane (111), and the second diffraction peak corresponds to a crystal plane (400); and a peak intensity of the first diffraction peak is I₍₁₁₁₎, a peak intensity of the second diffraction peak is I₍₄₀₀₎, and I₍₁₁₁₎ and I₍₄₀₀₎ satisfy 2.5≤I₍₁₁₁₎/I₍₄₀₀₎≤4.

In the above steps, by sintering the mixture including the lithium source, the nickel source, and the manganese source, the lithium nickel manganese oxide satisfying the above conditions can be obtained by sintering, and a bulk phase of the spinel phase is formed in the lithium nickel manganese oxide.

In some embodiments of the present application, the lithium nickel manganese oxide satisfies a chemical formula LiₓM_{y}Ni_{z}Mn_{2-y-z}O₄₋ₖ, where 0.8≤x≤1.05, 0≤y≤0.2, 0.3≤z≤0.7, - 0.1≤k≤0.5, and M includes one or more of B, Si, P, S, Nb, Mo, Ru, Te, Ce, Ta, and W.

In some embodiments of the present application, the sintering treatment includes:
heating the mixture to a first sintering temperature T1, holding at the first sintering temperature T1 for a first preset time t1, and then cooling at a first cooling rate v1 to room temperature to obtain a sintered product.

By performing the sintering treatment under the conditions of step S110, the spinel phase and the rock salt phase can be formed simultaneously, and by regulating the first sintering temperature T1 and the first cooling rate v1, the formation and content of the spinel phase and the rock salt phase in the lithium nickel manganese oxide can be regulated, that is, the values of I₍₁₁₁₎/I₍₄₀₀₎ and I_{RS}/I₍₄₀₀₎ can be regulated to satisfy the ranges according to the first aspect of the present application respectively.

In some embodiments of the present application, the method satisfies at least one of the following conditions:
(1) the first sintering temperature T1 satisfies 900 degrees Celsius (°C)≤T1≤1500°C and T1≥x×1000°C;
(2) the first preset time t1 satisfies 1 hour (h)≤t1≤20 h; and
(3) the first cooling rate v1 satisfies v1≥10 degrees Celsius per minute (°C/min).

In some embodiments of the present application, the method satisfies at least one of the following conditions:
(1) the first sintering temperature T1 satisfies 1000°C≤T1≤1300°C;
(2) the first preset time t1 satisfies 2 h≤t1≤15 h; and
(3) the first cooling rate v1 satisfies 10°C/min≤v1≤50°C/min.

In the sintering process, the stable phases at high temperature are the spinel phase (Mn-rich part) and the rock salt phase (Ni-rich part), so when T1 is within the above relatively high temperature range, it not only helps to form the spinel phase and the rock salt phase, thereby being beneficial to the increase of I₍₁₁₁₎/I₍₄₀₀₎ and I_{RS}/I₍₄₀₀₎, but also helps to reduce the abnormal growth of crystal grains, thereby taking into account the cycle storage life, kinetic performance, and processing performance.

In some embodiments of the present application, the method satisfies at least one of the following conditions:
(1) the mixture further includes an M source;
   the M source includes one or more of oxides, nitrate compounds, carbonate compounds, hydroxide compounds, and acetic acid containing element M, the element M including one or more of B, Si, P, S, Nb, Mo, Ru, Te, Ce, Ta, and W;
(2) the lithium source includes one or more of lithium oxide, lithium phosphate, lithium dihydrogen phosphate, lithium acetate, lithium hydroxide, lithium carbonate, and lithium nitrate;
(3) the nickel source includes one or more of nickel oxide, nickel phosphate, nickel acetate, nickel hydroxide, nickel carbonate, and nickel nitrate; and
(4) the manganese source includes one or more of manganese oxide, manganese phosphate, manganese acetate, manganese hydroxide, manganese carbonate, and manganese nitrate.

The element M has the function of inducing crystal preferred orientation and forming strong bonds with oxygen or transition metals in the lithium nickel manganese oxide. Adding the M source to the mixture can promote I₁₁₁/I₄₀₀ and I_{RS}/I₄₀₀ to reach the appropriate ranges described above in the present application, thereby better balancing the capacity and long-term performance.

In some embodiments of the present application, the sintering treatment further includes:
heating the material including the sintered product to a second sintering temperature T2, holding at the second sintering temperature T2 for a second preset time t2, and then cooling at a second cooling rate v2 to room temperature.

By performing the sintering treatment under the conditions of step S120, the phosphate can be melt-mixed with the lithium nickel manganese oxide, and by regulating the second sintering temperature T2 and the second cooling rate v2, the coating of the phosphate on the surface of the lithium nickel manganese oxide can be favorably achieved, so that the phosphate is coated on at least part of the surface of the lithium nickel manganese oxide.

In some embodiments of the present application, the method satisfies at least one of the following conditions:
(1) the second sintering temperature T2 satisfies T1-200°C≤T2≤T1 and T2≥900°C;
(2) the second preset time t2 satisfies 0.5 h≤t2≤5 h;
(3) the second cooling rate v2 satisfies v2≥10°C/min; and
(4) the material further includes a phosphate, the phosphate including at least one of orthophosphates, hydrogen phosphates, dihydrogen phosphates, metaphosphates, pyrophosphates, polyphosphates, hypophosphates, phosphites, monofluorophosphates, difluorophosphates, and trifluorophosphates containing at least one element of Li, Na, K, Mg, Al, Ti, Zr, La, Ta, Nb, Te, Mo, W, Sb, Ni, Mn, Fe, Co, and N.

In some embodiments of the present application, the method satisfies at least one of the following conditions:
(1) the second sintering temperature T2 satisfies T1-100°C≤T2≤T1 and T2≥950°C; and
(2) the second cooling rate v2 satisfies 10°C/min≤v2≤50°C/min.

When the second sintering temperature T2 is within the above range, it helps to improve the roundness of the growth of lithium nickel manganese oxide crystal grains, thereby improving its compaction density and reducing the specific surface area.

A third aspect of the present application provides a positive electrode sheet, including a positive electrode active material layer, where the positive electrode active material layer includes the positive electrode active material of the first aspect of the present application or the positive electrode active material prepared by the method of the second aspect of the present application.

In some embodiments of the present application, a compaction density P' of the positive electrode active material layer satisfies P'≥2.9 g/cm³.

In some embodiments of the present application, a compaction density P' of the positive electrode active material layer satisfies 3 g/cm³≤P'≤3.6 g/cm³.

When the compaction density of the positive electrode active material layer is within the above range, it not only helps to improve the volume energy density of the cell and reduce side reactions and dissolution of transition metal ions, but also can make sufficient voids in the positive electrode active material layer for full infiltration of the electrolyte, thereby maintaining the normal kinetic performance of the battery.

A fourth aspect of the present application provides a secondary battery, including the positive electrode sheet of the third aspect of the present application.

A fifth aspect of the present application provides an electric device, including the secondary battery of the fourth aspect of the present application.

The electric device of the present application includes the secondary battery provided in the present application, and thus has at least the same advantages as the secondary battery.

Details of one or more embodiments of the present application are set forth in the following drawings and description. Other features, objects, and advantages of the present application will become apparent from the description, drawings, and claims.

### BRIEF DESCRIPTION OF DRAWINGS

In order to more clearly illustrate the technical solutions of the embodiments of the present application, the accompanying drawings to be used in the embodiments of the present application will be briefly introduced below. Obviously, the accompanying drawings described below are only some embodiments of the present application. For those of ordinary skill in the art, other drawings can also be obtained based on these drawings without creative effort. In the drawings:
FIG. 1 is an X-ray diffraction pattern of positive electrode active materials of Example 1, Example 2, and Comparative Example 1 according to the embodiments of the present application.
FIG. 2 is a scanning electron microscope image of a positive electrode active material according to an embodiment of the present application.
FIG. 3 is a cross-sectional transmission electron microscope image of a positive electrode active material according to an embodiment of the present application.
FIG. 4 is a schematic diagram of a battery cell according to an embodiment of the present application.
FIG. 5 is an exploded view of the battery cell according to an embodiment of the present application shown in FIG. 5.
FIG. 6 is a schematic diagram of a battery module according to an embodiment of the present application.
FIG. 7 is a schematic diagram of a battery pack according to an embodiment of the present application.
FIG. 8 is an exploded view of the battery pack according to an embodiment of the present application shown in FIG. 7.
FIG. 9 is a schematic diagram of an electric device using the secondary battery according to an embodiment of the present application as a power source.

Description of reference signs: 1, battery pack; 2, upper box; 3, lower box; 4, battery module; 5, battery cell; 51, casing; 52, electrode assembly; 53, cover plate; and 6, electric device.

### DESCRIPTION OF EMBODIMENTS

Hereinafter, some embodiments of the positive electrode active material and preparation method therefor, positive electrode sheet, secondary battery, and electric device of the present application are described in detail with appropriate reference to the accompanying drawings. However, there may be cases where non-essential detailed descriptions are omitted. For example, detailed descriptions of well-known matters and repeated descriptions of substantially identical structures are omitted. This is to avoid unnecessarily lengthening the following description and to facilitate understanding by those skilled in the art. In addition, the accompanying drawings and the following description are provided to enable those skilled in the art to fully understand the present application and are not intended to limit the subject matter described in the claims.

The "scope" disclosed in the present application may be defined in the form of a lower limit and an upper limit, and a given scope is defined by selecting a lower limit and an upper limit, and the selected lower limit and upper limit define the boundaries of a specific scope. The scope defined in this way may include or exclude end points, and any end value may be independently included or excluded, and may be arbitrarily combined, that is, any lower limit may be combined with any upper limit to form a range. For example, if ranges of 60 to 120 and 80 to 110 are listed for a specific parameter, it is understood that ranges of 60 to 110 and 80 to 120 are also contemplated. In addition, if the minimum range values 1 and 2 are listed, and if the maximum range values 3, 4, and 5 are also listed, the following ranges are all contemplated: 1 to 3, 1 to 4, 1 to 5, 2 to 3, 2 to 4, and 2 to 5. In the present application, unless otherwise specified, the numerical range "a to b" represents an abbreviated representation of any real number combination between a and b, where a and b are both real numbers. For example, the numerical range "0 to 5" means that all real numbers between "0 to 5" have been fully listed herein, and "0 to 5" is only an abbreviated representation of these numerical combinations. In addition, when a parameter is expressed as an integer ≥2, it is equivalent to listing the parameter as, for example, integers 2, 3, 4, 5, 6, 7, 8, 9, 10, 11, and 12. For example, when a parameter is expressed as an integer selected from "2 to 10", it is equivalent to listing integers 2, 3, 4, 5, 6, 7, 8, 9, and 10.

In the present application, "plurality", "multiple", and the like, if not specifically limited, refer to greater than or equal to 2 in number. For example, "one or more" means one or greater than or equal to two.

If not specifically stated, all embodiments and optional embodiments of the present application can be combined with each other to form a new technical solution.

As used herein, reference to "an embodiment" means that a particular feature, structure, or characteristic described in connection with the embodiment can be included in at least one embodiment or implementation of the present application. The appearance of the phrase in various places in the specification does not necessarily refer to the same embodiment, nor is it an independent or alternative embodiment that is mutually exclusive with other embodiments. Those skilled in the art will explicitly and implicitly understand that the embodiments described herein can be combined with other embodiments. Reference to "an implementation" herein has a similar understanding.

Those skilled in the art will understand that in the methods of the various embodiments or examples, the order of writing the steps does not mean a strict execution order and does not impose any limitation on the implementation process, and the detailed execution order of each step should be determined by its function and possible intrinsic logic. If not specifically stated, all steps of the present application can be performed sequentially or randomly, preferably sequentially. For example, the method includes steps (a) and (b), indicating that the method may include steps (a) and (b) performed sequentially, or may include steps (b) and (a) performed sequentially. For example, the aforementioned method may further include step (c), indicating that step (c) can be added to the method in any order, for example, the method may include steps (a), (b), and (c), or may include steps (a), (c), and (b), or may include steps (c), (a), and (b), etc.

In the present application, open technical features or technical solutions described with words such as "containing", "comprising", "including", and the like, if not otherwise specified, do not exclude additional members other than the listed members, and can be regarded as providing both closed features or solutions consisting of the listed members and open features or solutions including additional members other than the listed members. For example, A includes a1, a2, and a3, if not otherwise specified, may also include other members, or may not include additional members, and can be regarded as providing both the feature or solution of "A consisting of a1, a2, and a3" and the feature or solution of "A including not only a1, a2, and a3 but also other members". In the present application, if not otherwise specified, A (such as B) means that B is a non-limiting example of A, and it can be understood that A is not limited to B.

In the present application, "optionally" and "optional" mean dispensable, that is, selected from either of the two parallel options "included" or "not included". If multiple "optional" appear in a technical solution, if not specifically stated, and there is no contradiction or mutual restriction, each "optional" is independent.

At present, when the spinel lithium nickel manganese oxide LiNi_{0.5}Mn_{1.5}O₄ positive electrode material is used in a full battery, its ultra-high lithium deintercalation potential (4.7 V vs Li/Li+) and the oxidation of high-valence Ni cause serious side reactions between the positive electrode material and the electrolyte. The electrolyte is consumed to generate a large amount of gas, which increases the risk of cell swelling and accelerates capacity decay. Meanwhile, the spinel lithium nickel manganese oxide positive electrode material suffers from dissolution of transition metal ions (such as manganese ions) due to insufficient structural stability. The dissolved transition metal ions deposit on the negative electrode surface, destroying the SEI film and accelerating the capacity decay of the negative electrode and the battery, ultimately leading to degradation of the storage performance of the battery.

To solve the above technical problems, the present application provides a positive electrode active material. By regulating the crystal structure of the positive electrode active material, the oxidative consumption of the electrolyte by the positive electrode can be reduced, and the intrinsic structure of the material can be stabilized to significantly reduce the dissolution of transition metal ions in the material, thereby improving the storage performance of the battery. The positive electrode active material will be described in more detail below.

According to a first aspect, the present application provides a positive electrode active material, including an active substance, where the active substance includes a lithium nickel manganese oxide, the lithium nickel manganese oxide includes a spinel phase, an X-ray diffraction pattern of the lithium nickel manganese oxide has a first diffraction peak at a diffraction angle 2θ of 18° to 19° and a second diffraction peak at a diffraction angle 2θ of 44° to 45°, the first diffraction peak corresponds to a crystal plane (111), and the second diffraction peak corresponds to a crystal plane (400); and a peak intensity of the first diffraction peak is I₍₁₁₁₎, a peak intensity of the second diffraction peak is I₍₄₀₀₎, and I₍₁₁₁₎ and I₍₄₀₀₎ satisfy 2.5≤I₍₁₁₁₎/I₍₄₀₀₎≤4.0.

It can be understood that in the X-ray diffraction pattern of the above lithium nickel manganese oxide, both the first diffraction peak and the second diffraction peak correspond to the spinel phase of the lithium nickel manganese oxide, that is, the first diffraction peak and the second diffraction peak are both peaks of the spinel phase.

It can be understood that the above "active substance" refers to a substance that can provide activity for the positive electrode active material and achieve battery energy conversion.

In some embodiments, I₍₁₁₁₎/I₍₄₀₀₎ may be 2.5, 2.6, 2.7, 2.8, 2.9, 3.0, 3.1, 3.2, 3.3, 3.4, 3.5, 3.6, 3.7, 3.8, 3.9, 4.0 or within any range composed of the above values.

The positive electrode active material provided in the present application includes a lithium nickel manganese oxide containing a spinel phase, the first preferred growth crystal plane of the lithium nickel manganese oxide (LNMO) is the (111) plane, that is, atoms grow layer by layer along the (111) plane, so the stacking quality of the (111) plane determines the stability of the crystal structure. One spinel LNMO crystal grain can have multiple (111) planes (eight side faces in the shape of the octahedral grain) growing synchronously, and form (a00) side faces after mutual contact, so the (111) plane can serve as the "base plane" of the spinel phase, and the (a00) plane can serve as the "end plane" of the spinel phase. Therefore, in the XRD pattern of the lithium nickel manganese oxide, the ratio of the peak intensity of the "base plane" (111) to the peak intensity of the end plane (a00), I₍₁₁₁₎/I₍ₐ₀₀₎, can indicate the degree of preferred orientation of the (111) plane. In the XRD pattern of the conventional spinel structure lithium nickel manganese oxide, the (111) and (400) peaks are two of the three strongest peaks, so the present application uses I₍₁₁₁₎/I₍₄₀₀₎ as an indicator of the degree of preferred orientation of the (111) plane. By controlling I₍₁₁₁₎/I₍₄₀₀₎ within the above range, the degree of preferred orientation of the (111) plane can be improved, thereby improving the stacking quality of the (111) plane, thereby improving the stability of the spinel phase. A more stable spinel phase indicates a slower dissolution of transition metal ions (such as manganese ions) in the lithium nickel manganese oxide and a slower capacity loss rate of the negative electrode and the battery, which helps to improve the storage performance of the battery.

In some embodiments, the lithium nickel manganese oxide satisfies 2.8≤I₍₁₁₁₎/I₍₄₀₀₎≤3.8.

In some embodiments, the lithium nickel manganese oxide satisfies 3.1≤I₍₁₁₁₎/I₍₄₀₀₎≤3.6.

In the XRD pattern of the spinel structure lithium nickel manganese oxide, when I₍₁₁₁₎/I₍₄₀₀₎ is within the above range, it helps to further improve the stability of the spinel structure, thereby further reducing the dissolution of transition metal ions (such as manganese ions) in the lithium nickel manganese oxide, and thus further improving the storage performance of the battery.

The X-ray diffraction pattern has a well-known meaning in the art and can be tested by known methods in the art. For example, the X-ray diffraction pattern of the positive electrode active material can be measured using CuKα1 radiation in accordance with JIS K 0131-1996 General Rules for X-ray Diffraction Analysis.

In some embodiments, the lithium nickel manganese oxide satisfies a chemical formula LiₓM_{y}Ni_{z}Mn_{2-y-z}O₄₋ₖ, where 0.8≤x≤1.05, 0≤y≤0.2, 0.3≤z≤0.7, -0.1≤k≤0.5, and M includes one or more of B, Si, P, S, Nb, Mo, Ru, Te, Ce, Ta, and W.

In some embodiments, the content x of the lithium element in the above lithium nickel manganese oxide may be 0.8, 0.85, 0.9, 0.95, 1.0, 1.05 or within any range composed of the above values.

In the positive electrode active material provided in the present application, when the lithium nickel manganese oxide satisfies the above chemical formula, and the content x of the lithium element is within the above range, it can not only enhance the degree of preferred orientation of the (111) plane in the spinel structure and improve the stability of the spinel structure, but also ensure the proportion of active lithium ions in the lithium nickel manganese oxide and the diffusion channels of the active lithium ions, so that the positive electrode active material has sufficient cycling activity.

In addition, in the lithium nickel manganese oxide, the close-packed plane of oxygen or transition metal ions (such as manganese ions) is the (111) plane; and when the lithium nickel manganese oxide satisfies the above chemical formula, the element M in the chemical formula can form strong bonds with oxygen or transition metal ions and improve the degree of preferred orientation of the (111) plane.

In some embodiments, 0.85≤x≤1.02. For example, x may be 0.85, 0.88, 0.91, 0.93, 0.95, 0.97, 0.99, 1.01, 1.02 or within any range composed of the above values.

In some embodiments, 0.9≤x≤0.99. For example, x may be 0.9, 0.91, 0.92, 0.93, 0.94, 0.95, 0.96, 0.97, 0.98, 0.99 or within any range composed of the above values.

In the lithium nickel manganese oxide, when the content x of the lithium element is within the above range, it can make the positive electrode active material have sufficient cycling activity while further improving the stability of the spinel structure.

In some embodiments, the content y of the element M in the above lithium nickel manganese oxide may be 0, 0.01, 0.02, 0.04, 0.06, 0.08, 0.1, 0.12, 0.14, 0.16, 0.18, 0.2 or within any range composed of the above values.

In the above chemical formula, when the content of the element M is within the above range, on the one hand, while ensuring a relatively high lithium content, it can also maintain I₍₁₁₁₎/I₍₄₀₀₎ at a relatively high level, thereby improving the degree of preferred orientation of the (111) plane in the spinel structure and improving the stability of the spinel structure. On the other hand, since the element M itself cannot exhibit variable valence and will occupy and reduce the proportion of active lithium ions in the lithium nickel manganese oxide, controlling the content of the element M within the above range can ensure that the positive electrode active material has sufficient cycling activity.

In some embodiments, 0.01≤y≤0.2. For example, y may be 0.01, 0.03, 0.05, 0.07, 0.09, 0.11, 0.13, 0.15, 0.17, 0.19, 0.2 or within any range composed of the above values.

In some embodiments, 0.02≤y≤0.1. For example, y may be 0.02, 0.03, 0.04, 0.05, 0.06, 0.07, 0.08, 0.09, 0.1 or within any range composed of the above values.

In the lithium nickel manganese oxide, when the content y of the element M is within the above range, the positive electrode active material can be provided with sufficient cycling activity while the stability of the spinel structure is further improved, thereby better balancing the capacity and long-term performance of the positive electrode active material.

In some embodiments, the lithium nickel manganese oxide includes a rock salt phase, where an X-ray diffraction pattern of the lithium nickel manganese oxide has a third diffraction peak at a diffraction angle 2θ of 43° to 44°, a peak intensity of the third diffraction peak is I_{RS}, and I_{RS} and I₍₄₀₀₎ satisfy 0.01≤I_{RS}/I₍₄₀₀₎≤0.2.

It can be understood that in the X-ray diffraction pattern of the above lithium nickel manganese oxide, the third diffraction peak corresponds to the rock salt phase of the lithium nickel manganese oxide, that is, the third diffraction peak is a peak of the rock salt phase.

In some embodiments, I_{RS}/I₍₄₀₀₎ may be 0.01, 0.03, 0.05, 0.07, 0.09, 0.11, 0.13, 0.15, 0.17, 0.19, 0.2 or within any range composed of the above values.

The lithium nickel manganese oxide includes a rock salt phase, and the nickel in the rock salt phase is stable low-valence nickel. By controlling I_{RS}/I₍₄₀₀₎ within the above range, that is, controlling the rock salt phase content within the above range, it can effectively reduce the oxidative decomposition of the electrolyte caused by high-valence nickel formed by detachment from the spinel phase, thereby reducing the oxidation of the electrolyte. In addition, the reduction of electrolyte oxidative decomposition can also reduce the dissolution of transition metal ions in the spinel phase, thereby reducing the decay of the negative electrode and battery capacity and improving the storage performance of the battery.

Furthermore, in the lithium nickel manganese oxide, by controlling I₍₁₁₁₎/I₍₄₀₀₎ and I_{RS}/I₍₄₀₀₎ within their respective ranges, the stability of the spinel phase can be improved, its oxidation and dissolution of transition metal ions at high voltage (such as 4.7 V) can be reduced, the oxidative decomposition of the electrolyte can also be reduced, and the dissolution of transition metal ions can be further reduced, effectively improving the storage performance of the battery.

In some embodiments, the I_{RS} and the I₍₄₀₀₎ satisfy 0.02≤I_{RS}/I₍₄₀₀₎≤0.1. For example, I_{RS}/I₍₄₀₀₎ may be 0.02, 0.04, 0.06, 0.08, 0.1 or within any range composed of the above values.

In some embodiments, the I_{RS} and the I₍₄₀₀₎ satisfy 0.05≤I_{RS}/I₍₄₀₀₎≤0.1. For example, I_{RS}/I₍₄₀₀₎ may be 0.05, 0.06, 0.07, 0.08, 0.09, 0.1 or within any range composed of the above values.

When I_{RS}/I₍₄₀₀₎ is within the above range, it helps to further reduce the oxidative decomposition of the electrolyte and further reduce the dissolution of transition metal ions in the spinel phase, thereby further improving the storage performance of the battery.

In some embodiments, the lithium nickel manganese oxide satisfies the following condition: 3.5≤(I₍₁₁₁₎+10×I_{RS})/I₍₄₀₀₎≤4.4. For example, (I₍₁₁₁₎+10×I_{RS})/I₍₄₀₀₎ may be 3.5, 3.6, 3.7, 3.8, 3.9, 4, 4.1, 4.2, 4.3, 4.4 or within any range composed of the above values.

In the lithium nickel manganese oxide, by controlling (I₍₁₁₁₎+10×I_{RS})/I₍₄₀₀₎ within the above range, it helps to reduce the adverse effects of the spinel phase and the rock salt phase on the material capacity and kinetics, thereby improving the capacity and kinetic performance of the material and the battery.

In some embodiments, the lithium nickel manganese oxide satisfies the following condition: 3.6≤(I₍₁₁₁₎+10×I_{RS})/I₍₄₀₀₎≤4.1. For example, (I₍₁₁₁₎+10×I_{RS})/I₍₄₀₀₎ may be 3.6, 3.65, 3.7, 3.75, 3.8, 3.85, 3.9, 3.95, 4, 4.05, 4.1 or within any range composed of the above values.

When (I₍₁₁₁₎+10×I_{RS})/I₍₄₀₀₎ is within the above range, it helps to further reduce the adverse effects of the spinel phase and the rock salt phase on the material capacity and kinetics, thereby further improving the capacity and kinetic performance of the material and the battery.

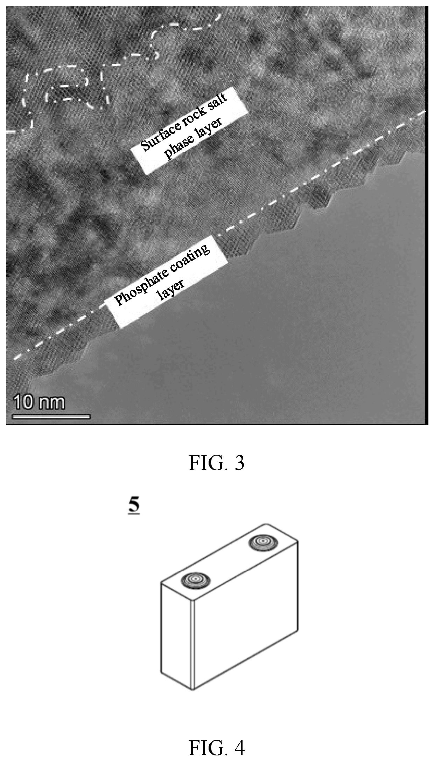

In some embodiments, the lithium nickel manganese oxide includes crystal grains of the spinel phase and crystal grains of the rock salt phase, and the crystal grains of the rock salt phase cover at least part of the surface of the crystal grains of the spinel phase in the form of a rock salt phase layer (see FIG. 3).

The lithium nickel manganese oxide includes crystal grains of the spinel phase and crystal grains of the rock salt phase, where the crystal grains of the spinel phase provide a bulk phase structure for the lithium nickel oxide, and the bulk phase structure has relatively high stability, which can slow down the dissolution of transition metal ions in the lithium nickel manganese oxide; while the crystal grains of the rock salt phase can reduce the oxidative decomposition of the electrolyte by high-valence nickel formed by detachment from the spinel phase, thereby reducing the oxidation of the electrolyte.

In addition, the crystal grains of the rock salt phase cover at least part of the surface of the crystal grains of the spinel phase in the form of a rock salt phase layer, that is, when the rock salt phase is present on the surface of the lithium nickel manganese oxide, the lithium nickel manganese oxide can maintain the nickel on the surface at a relatively low valence state after charging, which can further reduce the oxidation of the electrolyte, thereby improving the storage performance of the battery.

In some embodiments, a thickness of the rock salt phase layer is 20 nm to 200 nm. For example, the thickness of the rock salt phase layer may be 20 nm, 40 nm, 60 nm, 80 nm, 100 nm, 120 nm, 140 nm, 160 nm, 180 nm, 200 nm or within any range composed of the above values. Optionally, the thickness of the rock salt phase layer is 50 nm to 100 nm.

When the thickness of the rock salt phase layer is within the above range, long life and capacity can be balanced, while improving the storage performance of the battery.

The thickness of the rock salt phase layer has a well-known meaning in the art and can be tested by known methods in the art. For example, a transmission electron microscope (TEM, model: Hitachi, JEM-2100F) can be used for testing.

In some embodiments, the active substance further includes a phosphate.

In the active substance, the phosphate ions in the phosphate can preferentially capture HF formed by oxidative decomposition of the electrolyte, reducing the corrosion of the positive electrode active material caused by the electrolyte. In addition, they can also capture transition metal ions, inhibiting the dissolution of transition metal ions in the lithium nickel manganese oxide, thereby improving the storage performance of the battery.

In some embodiments, a mass percentage of the phosphate in the active substance is m, 0.2%≤m≤20%. For example, m may be 0.2%, 0.5%, 0.8%, 1%, 3%, 5%, 7%, 9%, 10%, 12%, 14%, 16%, 18%, 20% or within any range composed of the above values.

The mass percentage of the phosphate in the active substance has a well-known meaning in the art and can be tested by known methods in the art. For example, in accordance with EPA 6010D-2014 Inductively Coupled Plasma Atomic Emission Spectrometry, an inductively coupled plasma (ICP, such as model Optima 5300 DV) can be used for testing.

In some embodiments, m satisfies 0.5%≤m≤10%. For example, m may be 0.5%, 0.7%, 0.9%, 1%, 2%, 4%, 6%, 8%, 10% or within any range composed of the above values. Optionally, m satisfies 1%≤m≤5%.

When the mass percentage of the phosphate in the active substance is within the above range, it helps to further reduce the corrosion of the electrolyte on the positive electrode active material; and further inhibit the dissolution of transition metal ions in the lithium nickel manganese oxide, thereby further improving the storage performance of the battery.

In some embodiments, the phosphate is coated on at least part of the surface of the lithium nickel manganese oxide.

When the phosphate is coated on at least part of a surface of the lithium nickel manganese oxide, it can effectively exert the aforementioned effect of the phosphate in the active substance without affecting the phase structure (spinel phase and rock salt phase) of the lithium nickel manganese oxide.

In some embodiments, the phosphate includes but is not limited to at least one of orthophosphates, hydrogen phosphates, dihydrogen phosphates, metaphosphates, pyrophosphates, polyphosphates, hypophosphates, phosphites, monofluorophosphates, difluorophosphates, and trifluorophosphates containing at least one element of Li, Na, K, Mg, Al, Ti, Zr, La, Ta, Nb, Te, Mo, W, Sb, Ni, Mn, Fe, Co, and N.

In some embodiments, the active substance includes particles of the active substance, where the particles of the active substance include at least one of single crystal grains and quasi-single crystal grains.

In the particles of the active substance, the rock salt phase is mainly distributed on the particle surface, so when the particles of the active substance include single crystal grains and/or quasi-single crystal grains, each surface of the single crystal grains or quasi-single crystal grains will have more rock salt phase distributed, which helps more to improve the long-term stability of the positive electrode active material and the battery.

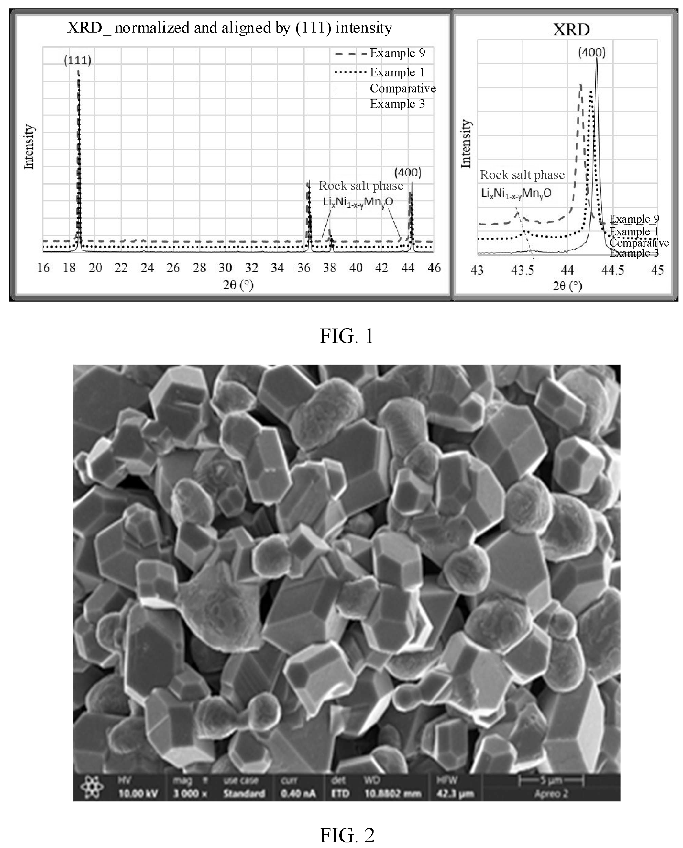

In some embodiments, the single crystal grains include at least one of truncated octahedral grains and spherical grains (see FIG. 2). Truncated octahedral grains and spherical grains exhibit better pressure resistance, which helps the positive electrode active material to obtain a higher compaction density and reduce its cracking.

In some embodiments, a compaction density P of the positive electrode active material under 6 tons of pressure satisfies P≥3 g/cm³.

In some embodiments, a compaction density P of the positive electrode active material under 6 tons of pressure satisfies 3 g/cm³≤P≤3.5 g/cm³. For example, P may be 3 g/cm³, 3.1 g/cm³, 3.2 g/cm³, 3.3 g/cm³, 3.4 g/cm³, 3.5 g/cm³ or within any range composed of the above values. Optionally, P satisfies 3.1 g/cm³≤P≤3.4 g/cm³.

In the positive electrode active material, particle cracking will expose unstable fresh interfaces, accelerating side reactions and dissolution of transition metal ions. When the compaction density of the positive electrode active material of the present application is within the above relatively high range, it can make the material particles have a morphology more conducive to dense packing, so the pressure required to achieve the same compaction is smaller, and the particles are less likely to break, thereby reducing the risk of particle cracking and reducing the occurrence of side reactions and dissolution of transition metal ions caused by particle cracking. In addition, a relatively high compaction density helps to improve the volume energy density of the cell and the battery.

The compaction density of the positive electrode active material under 6 tons of pressure has a well-known meaning in the art and can be tested by known methods in the art. For example, in accordance with the GB/T24533-2009 standard, an electronic pressure testing machine can be used, such as the UTM7305 electronic pressure testing machine. Approximately 1 g of the sample is accurately weighed and then added to a mold with a bottom area of 1.327 cm². A pressure of 6 tons is applied to the sample using a pressurizing device and maintained for 30 seconds under this pressure, and then the pressure is released. The height of the sample is subsequently measured to obtain the compaction density of the material through the formula P = m/(1.327×h). In the formula, P represents the compaction density of the material, m represents the mass of the sample, and h represents the height of the sample after being subjected to a pressure of 6 tons, maintained under this pressure for 30 seconds, and then the pressure is released.

In some embodiments, a volume average particle diameter Dv50 of the positive electrode active material satisfies 2 µm≤Dv50≤20 µm. For example, Dv50 may be 2 µm, 4 µm, 6 µm, 8 µm, 10 µm, 12 µm, 14 µm, 16 µm, 18 µm, 20 µm or within any range composed of the above values.

In some embodiments, a volume average particle diameter Dv50 of the positive electrode active material satisfies 3 µm≤Dv50≤15 µm. For example, Dv50 may be 3 µm, 5 µm, 7 µm, 9 µm, 11 µm, 13 µm, 15 µm or within any range composed of the above values. Optionally, Dv50 satisfies 5 µm≤Dv50≤10 µm.

When the volume average particle diameter Dv50 of the positive electrode active material is within the above range, it can better regulate parameters such as the crystal structure, oxygen defects, and specific surface area of the positive electrode active material, thereby improving its cycling performance.

The volume average particle diameter Dv50 of the positive electrode active material has a well-known meaning in the art and can be tested by known methods in the art. For example, it can be measured using a laser particle size analyzer with reference to GB/T 19077-2016 Particle Size Distribution Laser Diffraction Method, such as the Mastersizer 2000E laser particle size analyzer from Malvern Instruments Ltd., UK.

In some embodiments, volume average particle diameters Dv50, Dv90, and Dv10 of the positive electrode active material satisfy 0.8≤(Dv90-Dv10)/Dv50≤2. For example, (Dv90-Dv10)/Dv50 may be 0.8, 1, 1.2, 1.4, 1.6, 1.8, 2 or within any range composed of the above values.

In some embodiments, volume average particle diameters Dv50, Dv90, and Dv10 of the positive electrode active material satisfy 1≤(Dv90-Dv10)/Dv50≤1.8. For example, (Dv90-Dv10)/Dv50 may be 1, 1.1, 1.3, 1.5, 1.7, 1.8 or within any range composed of the above values. Optionally, Dv50, Dv90, and Dv10 satisfy 1.2≤(Dv90-Dv10)/Dv50≤1.5.

A larger (Dv90-Dv10)/Dv50 indicates that the particle size distribution of the positive electrode active material is wider, that is, the difference between large and small particles is greater. When (Dv90-Dv10)/Dv50 is within the above range, it helps to obtain a higher compaction density, while better balancing a relatively small specific surface area, thereby facilitating the improvement of the volume energy density of the material.

The volume average particle diameter Dv90 of the positive electrode active material refers to the particle size below which 90% of the particles lie in the volume-based particle size distribution of the positive electrode active material; and Dv10 refers to the particle size below which 10% of the particles lie in the volume-based particle size distribution of the positive electrode active material. Both Dv90 and Dv10 can be tested by known methods in the art. For example, they can be measured using a laser particle size analyzer in accordance with GB/T 19077-2016 Particle Size Distribution Laser Diffraction Method, such as the Mastersizer 2000E laser particle size analyzer from Malvern Instruments Ltd., UK.

In some embodiments, a specific surface area S of the positive electrode active material satisfies 0<S≤1 m²/g. For example, S may be 0.1 m²/g, 0.2 m²/g, 0.4 m²/g, 0.6 m²/g, 0.8 m²/g, 1 m²/g or within any range composed of the above values.

In some embodiments, a specific surface area S of the positive electrode active material satisfies 0<S≤0.7 m²/g. For example, S may be 0.1 m²/g, 0.2 m²/g, 0.3 m²/g, 0.4 m²/g, 0.5 m²/g, 0.6 m²/g, 0.7 m²/g or within any range composed of the above values. Optionally, S satisfies 0.1 m²/g≤S≤0.5 m²/g.

When the specific surface area of the positive electrode active material is within the above range, it helps to slow down the occurrence of surface side reactions, thereby facilitating the improvement of its long-term performance.

The specific surface area of the positive electrode active material has a well-known meaning in the art and can be tested by known methods in the art. For example, in accordance with GB/T 19587-2004 Gas Adsorption BET Method, after the sample is heated and degassed, the amount of gas adsorbed on the solid surface at different adsorption pressures is measured at constant low temperature. Based on the BET multilayer adsorption theory and its formula, the single molecular layer adsorption amount of the sample is obtained, thereby calculating the specific surface area of the solid sample per unit mass.

In some embodiments, a pH value of the positive electrode active material satisfies 9≤pH≤12. The pH value may be 9, 10, 11, 12 or within any range composed of the above values.

In some embodiments, a pH value of the positive electrode active material satisfies 10≤pH≤12. For example, the pH value may be 10, 10.5, 11, 11.5, 12 or within any range composed of the above values. Optionally, the pH value satisfies 10.5≤pH≤11.5.

When the pH of the positive electrode active material is within the above range, it indicates that the material contains appropriate basic groups, which can neutralize strong acids (such as hydrofluoric acid) generated at high voltage (such as 4.7 V), thereby reducing damage to the surface of the positive electrode active material. Moreover, it will not affect the processing performance of the material, nor will it deteriorate the battery performance due to the impaired processing performance of the material (such as easy moisture absorption and reaction with binder).

The pH value of the positive electrode active material has a well-known meaning in the art and can be tested by known methods in the art. For example, in accordance with GB/T 9724-2007 General Rules for Determination of pH Value of Chemical Reagents, the sample and DI water are prepared into a solution at a fixed ratio of 1:9, sealed, and stirred on a magnetic stirrer for 30 min. After stirring, the Erlenmeyer flask is placed in a 25°C constant-temperature water bath, left to stand for 1.5 h, and then the pH of the mixture is measured with a pH meter.

According to a second aspect, the present application provides a method for preparing a positive electrode active material, which is used to prepare the positive electrode active material of the first aspect of the present application, and may include the following step:

S10: Sinter a mixture including a lithium source, a nickel source, and a manganese source to obtain a positive electrode active material, where the positive electrode active material includes an active substance, the active substance includes a lithium nickel manganese oxide, the lithium nickel manganese oxide includes a spinel phase, an X-ray diffraction pattern of the lithium nickel manganese oxide has a first diffraction peak at a diffraction angle 2θ of 18° to 19° and a second diffraction peak at a diffraction angle 2θ of 44° to 45°, the first diffraction peak corresponds to a crystal plane (111), and the second diffraction peak corresponds to a crystal plane (400); and a peak intensity of the first diffraction peak is I₍₁₁₁₎, a peak intensity of the second diffraction peak is I₍₄₀₀₎, and I₍₁₁₁₎ and I₍₄₀₀₎ satisfy 2.5≤I₍₁₁₁₎/I₍₄₀₀₎≤4.

In the above steps, by sintering the mixture including the lithium source, the nickel source, and the manganese source, the lithium nickel manganese oxide satisfying the above conditions can be obtained by sintering, and a bulk phase of the spinel phase is formed in the lithium nickel manganese oxide.

In some embodiments, the lithium nickel manganese oxide satisfies a chemical formula LiₓM_{y}Ni_{z}Mn_{2-y-z}O₄₋ₖ, where 0.8≤x≤1.05, 0≤y≤0.2, 0.3≤z≤0.7, -0.1≤k≤0.5, and M includes one or more of B, Si, P, S, Nb, Mo, Ru, Te, Ce, Ta, and W.

It should be noted that the chemical formula satisfied by the above lithium nickel manganese oxide can be pre-designed according to the target composition to be obtained as needed before the step of preparing the positive electrode active material, and then the preparation of the positive electrode active material can be performed in reverse according to the pre-designed target composition.

In some embodiments, the sintering treatment in step S10 may further include the following step:

S110: Heat the mixture to a first sintering temperature T1, hold at the first sintering temperature T1 for a first preset time t1, and then cool at a first cooling rate v1 to room temperature to obtain a sintered product.

By performing the sintering treatment under the conditions of step S110, the spinel phase and the rock salt phase can be formed simultaneously, and by regulating the first sintering temperature T1 and the first cooling rate v1, the formation and content of the spinel phase and the rock salt phase in the lithium nickel manganese oxide can be regulated, that is, the values of I₍₁₁₁₎/I₍₄₀₀₎ and I_{RS}/I₍₄₀₀₎ can be regulated to satisfy the ranges according to the first aspect of the present application respectively.

In some embodiments, the first sintering temperature T1 satisfies 900°C≤T1≤1500°C and T1≥x×1000°C. For example, T1 may be 900°C, 1000°C, 1100°C, 1200°C, 1300°C, 1400°C, 1500°C or within any range composed of the above values.

In the process of the sintering treatment, the stable phases at high temperature are the spinel phase (Mn-rich region) and the rock salt phase (Ni-rich region). Therefore, when T1 is within the above relatively high temperature range, it is conducive to the formation of the spinel phase and the rock salt phase, thereby facilitating the increase of I₍₁₁₁₎/I₍₄₀₀₎ and I_{RS}/I₍₄₀₀₎; and can suppress abnormal grain growth of crystal grains, thereby balancing the cycle storage life, kinetic performance, and processing performance. At the same time, the lithium content x in the lithium nickel manganese oxide, that is, the content of the lithium source in the mixture of step S10, affects the formation of the spinel phase and the rock salt phase. By setting T1≥x×1000°C, the minimum temperature of the first sintering treatment can still be maintained at a relatively high level, thereby promoting the formation of the spinel phase and the rock salt phase.

In some embodiments, the first sintering temperature T1 satisfies 1000°C≤T1≤1300°C. For example, T1 may be 1000°C, 1050°C, 1150°C, 1250°C, 1300°C or within any range composed of the above values. Optionally, 1000°C≤T1≤1200°C.

In some embodiments, the first preset time t1 satisfies 1 h≤t1≤20 h. For example, t1 may be 1 h, 2 h, 4 h, 6 h, 8 h, 10 h, 12 h, 14 h, 16 h, 18 h, 20 h or within any range composed of the above values.

In some embodiments, the first preset time t1 satisfies 2 h≤t1≤15 h. For example, t1 may be 2 h, 3 h, 5 h, 7 h, 9 h, 11 h, 13 h, 15 h or within any range composed of the above values.

In some embodiments, the first cooling rate v1 satisfies v1≥10°C/min.

In some embodiments, the first cooling rate v1 satisfies 10°C/min≤v1≤50°C/min. For example, v1 may be 10°C/min, 20°C/min, 30°C/min, 40°C/min, 50°C/min or within any range composed of the above values.

When the first cooling rate v1 is within the above range, it helps to suppress the reduction of the rock salt phase caused by annealing, thereby promoting the improvement of I_{RS}/I₍₄₀₀₎.

In some embodiments, the mixture further includes an M source; where the M source includes one or more of oxides, nitrate compounds, carbonate compounds, hydroxide compounds, and acetic acid containing the element M, and the element M includes one or more of B, Si, P, S, Nb, Mo, Ru, Te, Ce, Ta, and W.

The element M has the function of inducing crystal preferred orientation and forming strong bonds with oxygen or transition metals in the lithium nickel manganese oxide. Adding the M source to the mixture can promote I₁₁₁/I₄₀₀ and I_{RS}/I₄₀₀ to reach the appropriate ranges described above in the present application, thereby better balancing the capacity and long-term performance.

In some embodiments, the lithium source includes but is not limited to one or more of lithium oxide, lithium phosphate, lithium dihydrogen phosphate, lithium acetate, lithium hydroxide, lithium carbonate, and lithium nitrate.

In some embodiments, the nickel source includes but is not limited to one or more of nickel oxide, nickel phosphate, nickel acetate, nickel hydroxide, nickel carbonate, and nickel nitrate.

In some embodiments, the manganese source includes but is not limited to one or more of manganese oxide, manganese phosphate, manganese acetate, manganese hydroxide, manganese carbonate, and manganese nitrate.

In some embodiments, after step S110, the sintering treatment in step S10 may further include the following step:

S120. Heat the material including the sintered product to a second sintering temperature T2, hold at the second sintering temperature T2 for a second preset time t2, and then cool at a second cooling rate v2 to room temperature.

It can be understood that the "room temperature" in steps S110 and S120 refers to 20°C to 30°C, further, it may be 25°C.

In some embodiments, the material in the above step S120 may further include a phosphate.

In some embodiments, the phosphate includes but is not limited to at least one of orthophosphates, hydrogen phosphates, dihydrogen phosphates, metaphosphates, pyrophosphates, polyphosphates, hypophosphates, phosphites, monofluorophosphates, difluorophosphates, and trifluorophosphates containing at least one element of Li, Na, K, Mg, Al, Ti, Zr, La, Ta, Nb, Te, Mo, W, Sb, Ni, Mn, Fe, Co, and N.

By performing the sintering treatment under the conditions of step S120, the phosphate can be melt-mixed with the lithium nickel manganese oxide, and by regulating the second sintering temperature T2 and the second cooling rate v2, the coating of the phosphate on the surface of the lithium nickel manganese oxide can be favorably achieved, so that the phosphate is coated on at least part of the surface of the lithium nickel manganese oxide.

The spinel phase and the rock salt phase can be formed simultaneously. By regulating the first sintering temperature T1 and the first cooling rate v1, the formation and content of the spinel phase and the rock salt phase in the lithium nickel manganese oxide can be controlled, that is, the values of I₍₁₁₁₎/I₍₄₀₀₎ and I_{RS}/I₍₄₀₀₎ can be regulated to respectively satisfy the ranges according to the first aspect of the present application.

In some embodiments, the second sintering temperature T2 satisfies T1-200°C≤T2≤T1 and T2≥900°C.

In some embodiments, the second sintering temperature T2 satisfies T1-100°C≤T2≤T1 and T2≥950°C.

When the second sintering temperature T2 is within the above range, it helps to improve the roundness of the growth of lithium nickel manganese oxide crystal grains, thereby improving its compaction density and reducing the specific surface area.

In some embodiments, the second preset time t2 satisfies 0.5 h≤t2≤5 h. For example, t2 may be 0.5 h, 1 h, 2 h, 3 h, 4 h, 5 h or within any range composed of the above values.

In some embodiments, the second cooling rate v2 satisfies v2≥10°C/min.

In some embodiments, the second cooling rate v2 satisfies 10°C/min≤v2≤50°C/min. For example, v2 may be 10°C/min, 20°C/min, 30°C/min, 40°C/min, 50°C/min or within any range composed of the above values.

In some embodiments, the material in the above step S120 may further include a nickel-containing compound. Addition of the nickel-containing compound in step 120 is conducive to further promoting the formation of the rock salt phase layer.

In some embodiments, the above nickel-containing compound includes but is not limited to one or more of nickel oxide, nickel phosphate, nickel acetate, nickel hydroxide, nickel carbonate, and nickel nitrate.

In addition, the secondary battery and electric device of the present application are described below with appropriate reference to the accompanying drawings.

Typically, a secondary battery includes a positive electrode sheet, a negative electrode sheet, an electrolyte, and a separator. During the charging and discharging process of the battery, active ions are repeatedly intercalated and deintercalated between the positive electrode sheet and the negative electrode sheet. The electrolyte functions to conduct ions between the positive electrode sheet and the negative electrode sheet. The separator is disposed between the positive electrode sheet and the negative electrode sheet, and mainly serves to prevent a short circuit between positive and negative electrodes while allowing ions to pass through.

### Positive electrode sheet

The positive electrode sheet includes a positive electrode current collector and a positive electrode active material layer provided on at least one surface of the positive electrode current collector, where the positive electrode active material layer includes the positive electrode active material of the first aspect of the present application or the positive electrode active material prepared by the method of the second aspect of the present application.

In some embodiments, a compaction density P' of the positive electrode active material layer satisfies P'≥2.9 g/cm³.

In some embodiments, a compaction density P' of the positive electrode active material layer satisfies 3 g/cm³≤P'≤3.6 g/cm³. For example, P' may be 3 g/cm³, 3.1 g/cm³, 3.2 g/cm³, 3.3 g/cm³, 3.4 g/cm³, 3.5 g/cm³, 3.6 g/cm³ or within any range composed of the above values. Optionally, P' satisfies 3.1 g/cm³≤P'≤3.5 g/cm³.

When the compaction density of the positive electrode active material layer is within the above range, it not only helps to improve the volume energy density of the cell, and reduce side reactions and dissolution of transition metal ions, but also can make sufficient voids in the positive electrode active material layer for full infiltration of the electrolyte, thereby maintaining the normal kinetic performance of the battery.

As a non-limiting example, the positive electrode current collector has two opposite surfaces in its own thickness direction, and the positive electrode active material layer is disposed on either or both of the two opposite surfaces of the positive electrode current collector.

In some of these embodiments, the positive electrode current collector may be a metal foil or a composite current collector. For example, aluminum foil may be used as the metal foil. The composite current collector may include a polymer material base layer and a metal layer formed on at least one surface of the polymer material base layer. The composite current collector may be obtained by forming a metal material on a polymer material substrate. In the positive electrode current collector, non-limiting examples of the metal material may include one or more of aluminum, aluminum alloy, nickel, nickel alloy, titanium, titanium alloy, silver, and silver alloy. In the positive electrode current collector, non-limiting examples of the polymer material substrate may include one or more of substrates such as polypropylene (PP), polyethylene terephthalate (PET), polybutylene terephthalate (PBT), polystyrene (PS), and polyethylene (PE).

In some of these embodiments, the positive electrode active material may also be other positive electrode active materials known in the art for batteries. As a non-limiting example, other positive electrode active materials may include one or more of the following materials: lithium-containing phosphates with olivine structure, lithium transition metal oxides, and modified compounds thereof. However, the present application is not limited to these materials, and other conventional materials usable as positive electrode active materials for batteries may also be used. These positive electrode active materials may be used alone or two or more may be used in combination. Examples of lithium transition metal oxides may include but are not limited to one or more of lithium cobalt oxide (such as LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Non-limiting examples of lithium-containing phosphates with olivine structure may include one or more of lithium iron phosphate, lithium iron phosphate carbon composite, lithium manganese phosphate, lithium manganese phosphate carbon composite, lithium manganese iron phosphate, and lithium manganese iron phosphate carbon composite. Non-limiting examples of lithium cobalt oxide may include LiCoO₂; non-limiting examples of lithium nickel oxide may include LiNiO₂; non-limiting examples of lithium manganese oxide may include LiMnO₂, LiMn₂O₄, and the like; non-limiting examples of lithium nickel cobalt manganese oxide may include LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), and the like. Non-limiting examples of lithium nickel cobalt aluminum oxide may include LiNi_{0.8}Co_{0.15}Al_{0.05}O₂.

It can be understood that the battery undergoes deintercalation and consumption of lithium (Li) during the charging and discharging process, and the content of Li in the positive electrode sheet varies when the battery is discharged to different states. In the recitation of positive electrode materials in the present application, unless otherwise specified, the content of Li refers to the initial state of the material. After the positive electrode material is applied to the positive electrode sheet in the battery system and subjected to charge-discharge cycles, the content of Li in the positive electrode material contained in the sheet usually changes. The content of Li may be measured by molar content, but is not limited thereto. With regard to "the content of Li being in the initial state of the material", the initial state of the material refers to the state before being fed to the positive electrode slurry. It can be understood that new materials obtained by appropriate modification based on the recited positive electrode materials are also within the scope of positive electrode materials, and the aforementioned appropriate modification refers to acceptable modification methods for positive electrode materials, a non-limiting example such as coating modification.

In the recitation of positive electrode materials in the present application, the content of oxygen (O) is only a theoretical state value, lattice oxygen release causes changes in the molar content of oxygen, and the actual content of O will fluctuate. The content of O may be measured by molar content, but is not limited thereto.

In some embodiments, the positive electrode active material may also include at least one of the following materials: sodium transition metal oxides, polyanionic compounds, and Prussian blue analogs. However, the present application is not limited to these materials, and other conventionally known materials that can be used as positive electrode active materials for sodium-ion batteries may also be used.

As an optional technical solution of the present application, in the sodium transition metal oxides, the transition metal may include one or more of Mn, Fe, Ni, Co, Cr, Cu, Ti, Zn, V, Zr, and Ce. Non-limiting examples of sodium transition metal oxides may be NaₓMO₂, where M may include one or more of Ti, V, Mn, Co, Ni, Fe, Cr, and Cu, 0<x≤1.

As an optional technical solution of the present application, the polyanionic compound may be a class of compounds having sodium ions, transition metal ions, and tetrahedral (YO₄)ⁿ⁻ anionic units. The transition metal may include one or more of Mn, Fe, Ni, Co, Cr, Cu, Ti, Zn, V, Zr, and Ce; Y may be one or more of P, S, and Si; and n represents the valence of (YO₄)ⁿ⁻.

The polyanionic compound may also be a class of compounds having sodium ions, transition metal ions, tetrahedral (YO₄)ⁿ⁻ anionic units, and halogen anions. The transition metal may include one or more of Mn, Fe, Ni, Co, Cr, Cu, Ti, Zn, V, Zr, and Ce; Y may be one or more of P, S, and Si, n represents the valence of (YO₄)ⁿ⁻; and the halogen may be one or more of F, Cl, and Br.

The polyanionic compound may also be a class of compounds having sodium ions, tetrahedral (YO₄)ⁿ⁻ anionic units, polyhedral units (ZO_{y})^{m+}, and optional halogen anions. Y may be one or more of P, S, and Si, n represents the valence of (YO₄)ⁿ⁻; Z represents a transition metal, which may include one or more of Mn, Fe, Ni, Co, Cr, Cu, Ti, Zn, V, Zr, and Ce, m represents the valence of (ZO_{y})^{m+}; the halogen may be one or more of F, Cl, and Br.

The polyanionic compound may include one or more of NaFePO₄, Na₃V₂(PO₄)₃ (sodium vanadium phosphate, abbreviated as NVP), Na₄Fe₃(PO₄)₂(P₂O₇), NaM'PO₄F, and Na₄Fe₃(PO₄)₂(P₂O₇) (0≤y≤1), where M' in NaM'PO₄F may include one or more of V, Fe, Mn, and Ni.

The Prussian blue analog may be a class of compounds having sodium ions, transition metal ions, and cyano ions (CN⁻). The transition metal may include one or more of Mn, Fe, Ni, Co, Cr, Cu, Ti, Zn, V, Zr, and Ce. Non-limiting examples of Prussian blue analogs may be NaₐMe_{b}Me'_{c}(CN)₆, where Me and Me' may each independently be one or more of Ni, Cu, Fe, Mn, Co, and Zn, 0<a≤2, 0<b<1, and 0<c<1.

In some of these embodiments, the positive electrode active material layer further optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some of these embodiments, the positive electrode active material layer further optionally includes a conductive agent. As a non-limiting example, the conductive agent may include one or more of superconducting carbon, acetylene black, carbon black, Ketjen black, carbon dots, carbon nanotubes, graphene, and carbon nanofibers.

In some of these embodiments, the positive electrode sheet may be prepared in the following manner: components for preparing the positive electrode sheet, such as a positive electrode active material, a conductive agent, a binder, and any other components, are dispersed in a solvent to form a positive electrode slurry; the positive electrode slurry is coated on at least one side surface of the positive electrode current collector; and after processes such as drying and cold pressing, the positive electrode sheet can be obtained. The type of solvent may be selected from, but not limited to, any one in the foregoing embodiments, such as N-methylpyrrolidone (NMP). The surface of the positive electrode current collector coated with the positive electrode slurry may be on a single surface of the positive electrode current collector or on both surfaces of the positive electrode current collector. The solid content of the positive electrode slurry may be 40wt% to 80wt%. The viscosity of the positive electrode slurry at room temperature may be adjusted to 5000 to 25000 millipascal-seconds (mPa·s). When coating the positive electrode slurry, the coating areal density on a dry weight basis (excluding solvent) may be 15 to 35 milligrams per square centimeter (mg/cm²). The compaction density of the positive electrode sheet may be 3.0 to 3.6 g/cm³, optionally 3.3 to 3.5 g/cm³.

### Negative electrode sheet

The negative electrode sheet includes a negative electrode current collector and a negative electrode active material layer provided on at least one surface of the negative electrode current collector, where the negative electrode active material layer includes a negative electrode active material.

As a non-limiting example, the negative electrode current collector has two opposite surfaces in its own thickness direction, and the negative electrode active material layer is disposed on either or both of the two opposite surfaces of the negative electrode current collector.

In some of these embodiments, the negative electrode current collector may be a metal foil or a composite current collector. For example, copper foil may be used as the metal foil. The composite current collector may include a polymer material base layer and a metal layer formed on at least one surface of the polymer material substrate. The composite current collector may be obtained by forming a metal material on a polymer material substrate. In the negative electrode current collector, non-limiting examples of the metal material may include one or more of copper, copper alloy, nickel, nickel alloy, titanium, titanium alloy, silver, and silver alloy. In the negative electrode current collector, non-limiting examples of the polymer material substrate may include one or more of substrates such as polypropylene (PP), polyethylene terephthalate (PET), polybutylene terephthalate (PBT), polystyrene (PS), and polyethylene (PE).

In some of these embodiments, the negative electrode active material may be negative electrode active materials known in the art for batteries. As a non-limiting example, the negative electrode active material may include one or more of the following materials: artificial graphite, natural graphite, soft carbon, hard carbon, silicon-based materials, tin-based materials, and lithium titanate. The silicon-based material may include one or more of elemental silicon, silicon oxide, silicon-carbon composite, silicon-nitrogen composite, and silicon alloy. The tin-based material may include one or more of elemental tin, tin oxide, and tin alloy. However, the present application is not limited to these materials, and other conventional materials usable as negative electrode active materials for batteries may also be used. These negative electrode active materials may be used alone, or two or more may be used in combination.

In some of these embodiments, the negative electrode active material layer further optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some of these embodiments, the negative electrode active material layer further optionally includes a conductive agent. The conductive agent may include one or more of superconducting carbon, acetylene black, carbon black, Ketjen black, carbon dots, carbon nanotubes, graphene, and carbon nanofibers.

In some of these embodiments, the negative electrode active material layer further optionally includes other auxiliaries, such as thickeners (such as carboxymethyl cellulose sodium (CMC-Na)).

In some of these embodiments, the negative electrode sheet may be prepared in the following manner: components for preparing the negative electrode sheet, such as a negative electrode active material, a conductive agent, a binder, and any other components, are dispersed in a solvent (non-limiting examples of the solvent such as deionized water) to form a negative electrode slurry; the negative electrode slurry is coated on at least one side surface of the negative electrode current collector; and after processes such as drying and cold pressing, the negative electrode sheet may be obtained. The surface of the negative electrode current collector coated with the negative electrode slurry may be on a single surface of the negative electrode current collector or on both surfaces of the negative electrode current collector. The solid content of the negative electrode slurry may be 40wt% to 60wt%. The viscosity of the negative electrode slurry at room temperature may be adjusted to 2000 to 10000 mPa·s. When coating the negative electrode slurry, the coating areal density on a dry weight basis (excluding solvent) may be 75 to 220 grams per square meter (g/m²). The compaction density of the negative electrode sheet may be 1.0 g/cm³ to 1.8 g/cm³.

### Electrolyte

The electrolyte functions to conduct ions between the positive electrode sheet and the negative electrode sheet. The present application imposes no particular limitation on the type of the electrolyte, which may be selected according to needs. For example, the electrolyte may be liquid, gel, or all-solid-state.

In some of these embodiments, the electrolyte is an electrolytic solution. The electrolytic solution includes an electrolyte salt and a solvent.

In some of these embodiments, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluorobis(oxalato)phosphate (LiDFOP), and lithium tetrafluoro(oxalato)phosphate (LiTFOP).

In some of these embodiments, the solvent may include one or more of ethylene carbonate (EC, 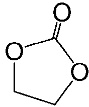 ), propylene carbonate (PC, 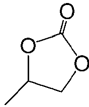 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate ( 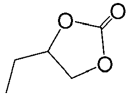 ), fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some of these embodiments, the electrolytic solution further optionally includes an additive. For example, the additive may include a negative electrode film-forming additive and a positive electrode film-forming additive, and may also include an additive capable of improving certain performances of the battery, such as an additive for improving the overcharge performance of the battery, and an additive for improving the high or low temperature performance of the battery.

In some embodiments, the additive in the electrolytic solution may include but is not limited to one or more of fluoroethylene carbonate (FEC), difluoroethylene carbonate (DFEC), trifluoromethyl ethylene carbonate (TFPC), and the like.

### Separator

In some of these embodiments, the secondary battery further includes a separator. The present application imposes no particular limitation on the type of the separator, and any known porous structure separator having good chemical stability and mechanical stability may be selected.

In some of these embodiments, the material of the separator may include one or more of glass fiber, non-woven fabric, polyethylene, polypropylene, and polyvinylidene fluoride. The separator may be a single-layer film or a multi-layer composite film, without particular limitation. When the separator is a multi-layer composite film, the materials of each layer may be the same or different, without particular limitation.

In some embodiments, the thickness of the separator is 6-40 µm, optionally 12-20 µm.

In some of these embodiments, the positive electrode sheet, negative electrode sheet, and separator can be made into an electrode assembly by a winding process or a lamination process.

In some of these embodiments, the secondary battery may include an outer package. The outer package can be used to encapsulate the above electrode assembly and electrolyte.

In some of these embodiments, the outer package of the secondary battery may be a hard shell, such as a hard plastic shell, an aluminum shell, and a steel shell. The outer package of the secondary battery may also be a soft package, such as a pouch soft package. The material of the soft package may be plastic, further, non-limiting examples of the plastic may include one or more of polypropylene, polybutylene terephthalate, and polybutylene succinate.

The secondary battery includes at least one battery cell. The secondary battery may include one or more battery cells.

In the present application, if not otherwise specified, "battery cell" refers to the basic unit that can achieve mutual conversion between chemical energy and electrical energy, further, it usually includes at least a positive electrode sheet, a negative electrode sheet, and an electrolyte. During the charging and discharging process of the battery, active ions are repeatedly intercalated and deintercalated between the positive electrode sheet and the negative electrode sheet. The electrolyte functions to conduct active ions between the positive electrode sheet and the negative electrode sheet.

The present application imposes no particular limitation on the shape of the battery cell, which may be cylindrical, prismatic, or any other shape. For example, FIG. 4 shows a battery cell 5 of a prismatic structure as an example.

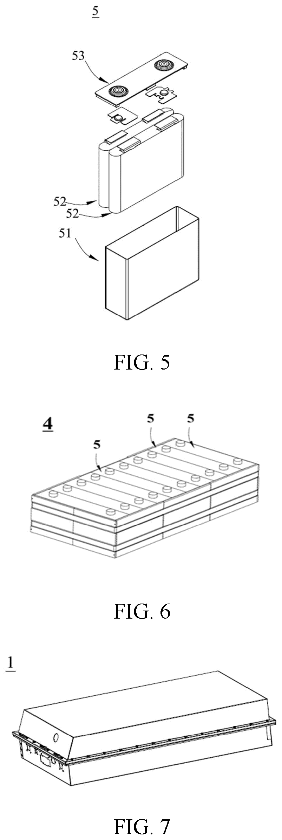

In some of these embodiments, referring to FIG. 5, the outer package may include a casing 51 and a cover plate 53. The casing 51 may include a bottom plate and side plates connected to the bottom plate, and the bottom plate and the side plates enclose to form an accommodating cavity. The casing 51 has an opening in communication with the accommodating cavity, and the cover plate 53 can cover the opening to close the accommodating cavity. The positive electrode sheet, the negative electrode sheet, and the separator may form an electrode assembly 52 by a winding process or a lamination process. The electrode assembly 52 is encapsulated in the accommodating cavity. The electrolyte is infiltrated in the electrode assembly 52. The number of electrode assemblies 52 included in the battery cell 5 may be one or more, and those skilled in the art can select according to actual needs.

The secondary battery may be a battery module 4 or a battery pack 1.

The battery module includes at least one battery cell. The number of battery cells contained in the battery module may be one or more, and those skilled in the art may select an appropriate number according to the application and capacity of the battery module.

FIG. 6 shows a battery module 4 as an example. Referring to FIG. 6, in the battery module 4, a plurality of battery cells 5 may be arranged in sequence along the length direction of the battery module 4. Certainly, they may also be arranged in any other manner. Further, the plurality of battery cells 5 may be fixed by fasteners.

Optionally, the battery module 4 may further include a housing having an accommodating space, and the plurality of battery cells 5 are accommodated in the accommodating space.

In some of these embodiments, the above battery module may also be assembled into a battery pack, and the number of battery modules included in the battery pack may be one or more, and those skilled in the art may select an appropriate number according to the application and capacity of the battery pack.

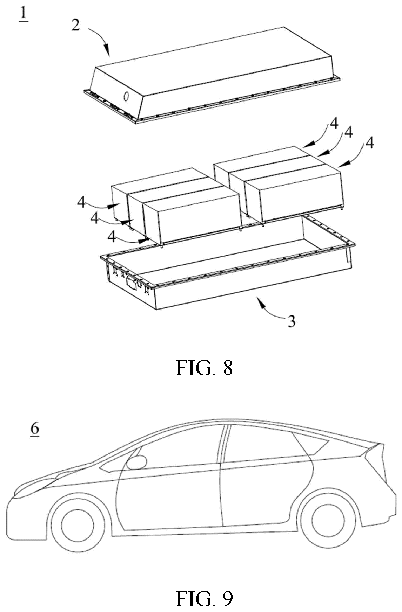

FIG. 7 and FIG. 8 show a battery pack 1 as an example. Referring to FIG. 7 and FIG. 8, the battery pack 1 may include a battery box and a plurality of battery modules 4 disposed in the battery box. The battery box includes an upper box 2 and a lower box 3, the upper box 2 can cover the lower box 3 to form a closed space for accommodating the battery modules 4. The plurality of battery modules 4 may be arranged in the battery box in any manner.

In addition, the present application further provides an electric device, where the electric device includes the secondary battery provided in the present application. The secondary battery may be used as a power source of the electric device or as an energy storage unit of the electric device. The electric device may include mobile devices, electric vehicles, electric trains, ships, satellites, energy storage systems, and the like, but is not limited thereto. The mobile device may be, for example, a mobile phone and a notebook computer; and the electric vehicle may be, for example, a pure electric vehicle, a hybrid electric vehicle, a plug-in hybrid electric vehicle, an electric bicycle, an electric scooter, an electric golf cart, and an electric truck, but is not limited thereto.

As the electric device, the secondary battery may be selected according to its usage needs.

FIG. 9 shows an electric device 6 as an example. The electric device is a pure electric vehicle, a hybrid electric vehicle, a plug-in hybrid electric vehicle, or the like. To meet the high power and high energy density requirements of the electric device for the secondary battery, a battery pack or battery module may be used.

As another example, the device may be a mobile phone, tablet, notebook computer, or the like. Such devices are generally required to be light and thin, and a secondary battery may be used as a power source.

### Examples

Hereinafter, examples of the present application are described. The examples described below are exemplary and are merely used for explaining the present application, and should not be construed as limiting the present application. In the examples, techniques or conditions not specified were carried out according to techniques or conditions described in the literature in the art or according to product instructions. Reagents or instruments not specified by manufacturers were all conventional products commercially available.

### Example 1

### (1) Preparation of positive electrode active material

Li₂CO₃, NiO, and Mn₃O₄ powders were weighed at corresponding stoichiometric ratios according to the target composition Li_{0.95}Ni_{0.5}Mn_{1.5}O₄₋ₖ, then mixed uniformly to obtain a mixture powder of raw materials.

The above mixture powder was subjected to a first sintering treatment (first sintering), that is, heated to 1100°C in an air atmosphere and held for 6 hours, then cooled to room temperature at a rate of 20°C/min to obtain a sintered product, and the positive electrode active material Li_{0.95}Ni_{0.5}Mn_{1.5}O_{3.8} was obtained.

### (2) Preparation of positive electrode sheet

The positive electrode active material of step (1), conductive carbon black (Super P), and PVDF were mixed at a weight ratio of 96:2.5:1.5, an appropriate amount of solvent N-methylpyrrolidone (NMP) was added, and the mixture was stirred uniformly to obtain a positive electrode slurry. The positive electrode slurry was coated on both side surfaces of the positive electrode current collector aluminum foil and dried after coating to obtain a positive electrode sheet. The loading amount of the positive electrode active material on one side of the positive electrode current collector was 0.016 g/cm².

### (3) Preparation of negative electrode sheet

The negative electrode active material artificial graphite, a conductive agent carbon black (Super P), a binder styrene-butadiene rubber, and a thickener carboxymethyl cellulose sodium were fully stirred and mixed at a mass ratio of 96:1:1:2 in an appropriate amount of solvent deionized water to form a uniform negative electrode slurry; the negative electrode slurry was uniformly coated on both side surfaces of the negative electrode current collector copper foil, dried, and cold pressed to obtain the negative electrode sheet. The loading amount of the negative electrode active material on one side of the negative electrode current collector was 0.007 g/cm².

### (4) Separator

A polypropylene separator with a thickness of 12 µm was selected.

### (5) Preparation of electrolytic solution

The organic solvent was a mixed solution containing ethylene carbonate (EC), ethyl methyl carbonate (EMC), and diethyl carbonate (DEC), where the volume ratio of EC, EMC, and DEC was 20:20:60. In an argon atmosphere glove box with a water content <10 parts per million (ppm), the sufficiently dried lithium salt LiPF₆ was dissolved in the organic solvent and mixed uniformly to obtain the electrolytic solution. The concentration of the lithium salt was 1 mole per liter (mol/L).

### (6) Preparation of battery

The above-prepared positive electrode sheet, separator, and negative electrode sheet were stacked in order, with the separator disposed in the middle of the positive and negative electrode sheets for insulation. The assembly was shaped and packaged in an aluminum-plastic bag. The electrolytic solution was injected, and after packaging, formation and capacity testing were performed to prepare a pouch battery.

### Examples 2 to 38

The positive electrode active materials and batteries in Examples 2 to 38 were prepared in a similar manner to Example 1, except that relevant parameters of the positive electrode active materials were adjusted. Detailed parameters are shown in Table 1 and Table 2 below.

### Example 39

The positive electrode active material and battery in Example 39 was prepared in a similar manner to Example 1, except that after the sintered product was obtained in step (1), the sintered product was mechanically mixed with lithium phosphate. Detailed parameters are shown in Table 1 below.

### Example 40

The positive electrode active material and battery in Example 40 was prepared in a similar manner to Example 1, except that after the sintered product was obtained in step (1), the sintered product was uniformly mixed with lithium phosphate and then subjected to a second sintering treatment (second sintering) to achieve coating of lithium phosphate on the sintered product. Detailed parameters are shown in Table 1 and Table 2 below.

### Examples 41 to 49

The positive electrode active materials and batteries in Examples 41 to 49 were prepared in a similar manner to Example 41, except that the type and content of the phosphate were varied. Detailed parameters are shown in Table 1 and Table 2 below.

### Examples 50 to 51

The positive electrode active materials and batteries in Examples 50 to 51 were prepared in a similar manner to Example 1, except that after the sintered product was obtained in step (1), the sintered product was uniformly mixed with nickel oxide equivalent to 2% of the mass of the sintered product and then subjected to a second sintering treatment (second sintering). Detailed parameters are shown in Table 1 and Table 2 below.

### Examples 52 to 53

The positive electrode active materials and batteries in Examples 52 to 53 were prepared in a similar manner to Example 1, except that after the sintered product was obtained in step (1), the sintered product was uniformly mixed with nickel oxide equivalent to 5% of the mass of the sintered product and then subjected to a second sintering treatment (second sintering). Detailed parameters are shown in Table 1 and Table 2 below.

### Comparative Examples 1 to 4

The positive electrode active materials and batteries in Comparative Examples 1 to 4 were prepared in a similar manner to Example 1, except that parameters of the lithium nickel manganese oxide in the positive electrode active material were adjusted. Detailed parameters are shown in Table 1 and Table 2 below.

The relevant parameters of the positive electrode active materials and their preparation processes in the above Examples 1 to 53 and Comparative Examples 1 to 4 are shown in Tables 1 and 2 below, where "/" indicates that no corresponding value exists. In Table 1, the addition amount of the phosphate was calculated as a percentage of the mass of the sintered product; for example, the 3% addition amount in Example 39 represented 3% of the mass of the sintered product.

**Table 1**

| | Molar ratio of feeding substances: Li:Ni:Mn:M | Preparation process of positive electrode active material | | | | | | | | |
|---|---|---|---|---|---|---|---|---|---|---|
| | | T1 (°C) | t1 (h) | v1 (°C/min) | T2 (°C) | t2 (h) | v2 (°C/min) | Phosphate | | |
| | | | | | | | | Type | Addition amount (%) | Phosphate addition method |
| Example 1 | 0.95:0.5:1.5 | 1100 | 6 | 20 | / | / | / | / | / | / |
| Example 2 | 1.08:0.5:1.5 | 1100 | 6 | 20 | / | / | / | / | / | / |
| Example 3 | 1.05:0.5:1.5 | 1100 | 6 | 20 | / | / | / | / | / | / |
| Example 4 | 1.02:0.5:1.5 | 1100 | 6 | 20 | / | / | / | / | / | / |
| Example 5 | 0.99:0.5:1.5 | 1100 | 6 | 20 | / | / | / | / | / | / |
| Example 6 | 0.97:0.5:1.5 | 1100 | 6 | 20 | / | / | / | / | / | / |
| Example 7 | 0.90:0.5:1.5 | 1100 | 6 | 20 | / | / | / | / | / | / |
| Example 8 | 0.88:0.5:1.5 | 1100 | 6 | 20 | / | / | / | / | / | / |
| Example 9 | 0.85:0.5:1.5 | 1100 | 6 | 20 | / | / | / | / | / | / |
| Example 10 | 0.83:0.5:1.5 | 1100 | 6 | 20 | / | / | / | / | / | / |
| Example 11 | 0.80:0.5:1.5 | 1100 | 6 | 20 | / | / | / | / | / | / |
| Example 12 | 0.78:0.5:1.5 | 1100 | 6 | 20 | / | / | / | / | / | / |
| Example 13 | 0.95:0.5:1.5 | 880 | 6 | 20 | / | / | / | / | / | / |
| Example 14 | 0.95:0.5:1.5 | 900 | 6 | 20 | / | / | / | / | / | / |
| Example 15 | 0.95:0.5:1.5 | 950 | 6 | 20 | / | / | / | / | / | / |
| Example 16 | 0.95:0.5:1.5 | 970 | 6 | 20 | / | / | / | / | / | / |
| Example 17 | 0.95:0.5:1.5 | 1000 | 6 | 20 | / | / | / | / | / | / |
| Example 18 | 0.95:0.5:1.5 | 1060 | 6 | 20 | / | / | / | / | / | / |
| Example 19 | 0.95:0.5:1.5 | 1300 | 6 | 20 | / | / | / | / | / | / |
| Example 20 | 0.95:0.5:1.5 | 1360 | 6 | 20 | / | / | / | / | / | / |
| Example 21 | 0.95:0.5:1.5 | 1400 | 6 | 20 | / | / | / | / | / | / |
| Example 22 | 0.95:0.5:1.5 | 1480 | 6 | 20 | / | / | / | / | / | / |
| Example 23 | 0.95:0.5:1.5 | 1500 | 6 | 20 | / | / | / | / | / | / |
| Example 24 | 0.95:0.5:1.5 | 1600 | 6 | 20 | / | / | / | / | / | / |
| Example 25 | 0.95:0.5:1.5 | 1100 | 6 | 1 | / | / | / | / | / | / |
| Example 26 | 0.95:0.5:1.5 | 1100 | 6 | 5 | / | / | / | / | / | / |
| Example 27 | 0.95:0.5:1.5 | 1100 | 6 | 10 | / | / | / | / | / | / |
| Example 28 | 0.95:0.5:1.5 | 1100 | 6 | 50 | / | / | / | / | / | / |
| Example 29 | 0.95:0.5:1.5 | 1100 | 6 | 80 | / | / | / | / | / | / |
| Example 30 | 0.95:0.5:1.45:0.05 | 1100 | 6 | 20 | / | / | / | / | / | / |
| Example 31 | 0.95:0.5:1.45:0.05 | 1100 | 6 | 20 | / | / | / | / | / | / |
| Example 32 | 0.95:0.5:1.45:0.05 | 1100 | 6 | 20 | / | / | / | / | / | / |
| Example 33 | 0.95:0.5:1.45:0.05 | 1100 | 6 | 20 | / | / | / | / | / | / |
| Example 34 | 0.95:0.5:1.49:0.01 | 1100 | 6 | 20 | / | / | / | / | / | / |
| Example 35 | 0.95:0.5:1.48:0.02 | 1100 | 6 | 20 | / | / | / | / | / | / |
| Example 36 | 0.95:0.5:1.40:0.10 | 1100 | 6 | 20 | / | / | / | / | / | / |
| Example 37 | 0.95:0.5:1.30:0.20 | 1100 | 6 | 20 | / | / | / | / | / | / |
| Example 38 | 0.95:0.5:1.20:0.30 | 1100 | 6 | 20 | / | / | / | / | / | / |
| Example 39 | 0.95:0.5:1.45:0.05 | 1100 | 6 | 20 | / | / | / | Lithium phosphate | 3 | Mechanical mixing |
| Example 40 | 0.95:0.5:1.45:0.05 | 1100 | 6 | 20 | 1000 | 2 | 20 | Lithium phosphate | 3 | Two-step sintering coating |
| Example 41 | 0.95:0.5:1.45:0.05 | 1100 | 6 | 20 | / | / | / | Lithium titanium aluminum phosphate | 3 | Mechanical mixing |
| Example 42 | 0.95:0.5:1.45:0.05 | 1100 | 6 | 20 | / | / | / | Nickel phosphate | 3 | Mechanical mixing |
| Example 43 | 0.95:0.5:1.45:0.05 | 1100 | 6 | 20 | / | / | / | Lithium iron phosphate | 3 | Mechanical mixing |
| Example 44 | 0.95:0.5:1.45:0.05 | 1100 | 6 | 20 | / | / | / | Lithium phosphate | 0.1 | Mechanical mixing |
| Example 45 | 0.95:0.5:1.45:0.05 | 1100 | 6 | 20 | / | / | / | Lithium phosphate | 0.2 | Mechanical mixing |
| Example 46 | 0.95:0.5:1.45:0.05 | 1100 | 6 | 20 | / | / | / | Lithium phosphate | 0.5 | Mechanical mixing |
| Example 47 | 0.95:0.5:1.45:0.05 | 1100 | 6 | 20 | / | / | / | Lithium phosphate | 10 | Mechanical mixing |
| Example 48 | 0.95:0.5:1.45:0.05 | 1100 | 6 | 20 | / | / | / | Lithium phosphate | 20 | Mechanical mixing |
| Example 49 | 0.95:0.5:1.45:0.05 | 1100 | 6 | 20 | / | / | / | Lithium phosphate | 25 | Mechanical mixing |
| Example 50 | 0.95:0.5:1.5 | 1100 | 6 | 20 | 1000 | 12 | 20 | / | / | / |
| Example 51 | 0.95:0.5:1.5 | 1000 | 6 | 1 | 950 | 3 | 10 | / | / | / |
| Example 52 | 0.95:0.5:1.5 | 1000 | 6 | 1 | 950 | 3 | 10 | / | / | / |
| Example 53 | 0.95:0.5:1.5 | 1100 | 6 | 20 | 1000 | 2 | 20 | / | / | / |
| Comparative Example 1 | 1.1:0.5:1.5 | 1100 | 6 | 20 | / | / | / | / | / | / |
| Comparative Example 2 | 0.75:0.5:1.5 | 1100 | 6 | 20 | / | / | / | / | / | / |
| Comparative Example 3 | 1.02:0.5:1.5 | 970 | 6 | 20 | / | / | / | / | / | / |
| Comparative Example 4 | 1.0:0.5:1.5 | 950 | 10 | <10 | / | / | / | / | / | / |

**Table 2**

| | Positive electrode active material | | | | | | | | | | |
|---|---|---|---|---|---|---|---|---|---|---|---|
| | Lithium nickel manganese oxide | | | | | | | | | Phosphate | |
| | I₍₁₁₁₎/I_{(4 00)} | I_{RS}/I_{(4 00)} | (I₍₁₁₁₎+10×I_{RS})I ₍₄₀₀₎ | Rock salt layer thickness (nm) | Type of active substance particles | Chemical formula | x | y | Element M | Type | m (%) |
| Example 1 | 3.2 | 0.061 | 3.81 | 34 | Single crystal | Li_{0.95}Ni_{0.5}Mn_{1.5}O_{3.8} | 0.9 5 | 0 | / | / | / |
| Example 2 | 2.5 | 0.051 | 3.01 | 28 | Single crystal | Li_{1.08}Ni_{0.5}Mn_{1.5}O₄ | 1.0 8 | 0 | / | / | / |
| Example 3 | 2.6 | 0.053 | 3.13 | 30 | Single crystal | Li_{1.05}Ni_{0.5}Mn_{1.5}O₄ | 1.0 5 | 0 | / | / | / |
| Example 4 | 2.8 | 0.055 | 3.35 | 31 | Single crystal | Li_{1.02}Ni_{0.5}Mn_{1.5}O₄ | 1.0 2 | 0 | / | / | / |
| Example 5 | 3.0 | 0.056 | 3.56 | 31 | Single crystal | Li_{0.99}Ni_{0.5}Mn_{1.5}O_{3.9} | 0.9 9 | 0 | / | / | / |
| Example 6 | 3.1 | 0.058 | 3.68 | 32 | Single crystal | Li_{0.97}Ni_{0.5}Mn_{1.5}O_{3.9} | 0.9 7 | 0 | / | / | / |
| Example 7 | 3.5 | 0.063 | 4.13 | 35 | Single crystal | Li_{0.9}Ni_{0.5}Mn_{1.5}O_{3.7} | 0.9 | 0 | / | / | / |
| Example 8 | 3.6 | 0.064 | 4.24 | 36 | Single crystal | Li_{0.88}Ni_{0.5}Mn_{1.5}O_{3.7} | 0.8 8 | 0 | / | / | / |
| Example 9 | 3.7 | 0.065 | 4.35 | 36 | Single crystal | Li_{0.85}Ni_{0.5}Mn_{1.5}O_{3.7} | 0.8 5 | 0 | / | / | / |
| Example 10 | 3.8 | 0.066 | 4.46 | 37 | Single crystal | Li_{0.83}Ni_{0.5}Mn_{1.5}O_{3.6} | 0.8 3 | 0 | / | / | / |
| Example 11 | 3.9 | 0.066 | 4.56 | 37 | Single crystal | Li_{0.8}Ni_{0.5}Mn_{1.5}O_{3.6} | 0.8 | 0 | / | / | / |
| Example 12 | 4.0 | 0.067 | 4.67 | 37 | Single crystal | Li_{0.78}Ni_{0.5}Mn_{1.5}O_{3.6} | 0.78 | 0 | / | / | / |
| Example 13 | 2.8 | 0 | 2.8 | 0 | Polycrystal | Li_{0.95}Ni_{0.5}Mn_{1.5}O_{3.9} | 0.95 | 0 | / | / | / |
| Example 14 | 2.9 | 0 | 2.9 | 0 | Polycrystal | Li_{0.95}Ni_{0.5}Mn_{1.5}O_{3.9} | 0.95 | 0 | / | / | / |
| Example 15 | 3.0 | 0.010 | 3.1 | 6 | Quasi-single crystal | Li_{0.95}Ni_{0.5}Mn_{1.5}O_{3.9} | 0.95 | 0 | / | / | / |
| Example 16 | 3.0 | 0.020 | 3.2 | 11 | Quasi-single crystal | Li_{0.95}Ni_{0.5}Mn_{1.5}O_{3.9} | 0.95 | 0 | / | / | / |
| Example 17 | 3.1 | 0.038 | 3.48 | 21 | Single crystal | Li_{0.95}Ni_{0.5}Mn_{1.5}O_{3.8} | 0.95 | 0 | / | / | / |
| Example 18 | 3.2 | 0.050 | 3.7 | 28 | Single crystal | Li_{0.95}Ni_{0.5}Mn_{1.5}O_{3.8} | 0.95 | 0 | / | / | / |
| Example 19 | 3.4 | 0.087 | 4.27 | 48 | Single crystal | Li_{0.95}Ni_{0.5}Mn_{1.5}O_{3.8} | 0.95 | 0 | / | / | / |
| Example 20 | 3.5 | 0.100 | 4.5 | 56 | Single crystal | Li_{0.95}Ni_{0.5}Mn_{1.5}O_{3.7} | 0.95 | 0 | / | / | / |
| Example 21 | 3.5 | 0.149 | 4.99 | 83 | Single crystal | Li_{0.95}Ni_{0.5}Mn_{1.5}O_{3.7} | 0.95 | 0 | / | / | / |
| Example 22 | 3.6 | 0.200 | 5.6 | 111 | Single crystal | Li_{0.95}Ni_{0.5}Mn_{1.5}O_{3.7} | 0.95 | 0 | / | / | / |
| Example 23 | 3.6 | 0.213 | 5.73 | 119 | Single crystal | Li_{0.95}Ni_{0.5}Mn_{1.5}O_{3.6} | 0.95 | 0 | / | / | / |
| Example 24 | 3.7 | 0.224 | 5.94 | 125 | Single crystal | Li_{0.95}Ni_{0.5}Mn_{1.5}O_{3.6} | 0.95 | 0 | / | / | / |
| Example 25 | 2.8 | 0.015 | 2.95 | 0 | Single crystal | Li_{0.95}Ni_{0.5}Mn_{1.5}O_{3.9} | 0.95 | 0 | / | / | / |
| Example 26 | 2.9 | 0.024 | 3.14 | 8 | Single crystal | Li_{0.95}Ni_{0.5}Mn_{1.5}O_{3.9} | 0.95 | 0 | / | / | / |
| Example 27 | 3.1 | 0.039 | 3.49 | 17 | Single crystal | Li_{0.95}Ni_{0.5}Mn_{1.5}O_{3.8} | 0.95 | 0 | / | / | / |
| Example 28 | 3.4 | 0.096 | 4.36 | 61 | Single crystal | Li_{0.95}Ni_{0.5}Mn_{1.5}O_{3.8} | 0.95 | 0 | / | / | / |
| Example 29 | 3.5 | 0.105 | 4.55 | 106 | Single crystal | Li_{0.95}Ni_{0.5}Mn_{1.5}O_{3.7} | 0.95 | 0 | / | / | / |
| Example 30 | 3.5 | 0.054 | 4.04 | 30 | Single crystal | Li_{0.95}Te_{0.05}Ni_{0.5}Mn_{1.4 5}O_{3.9} | 0.95 | 0.05 | Te | / | / |
| Example 31 | 3.4 | 0.063 | 4.03 | 35 | Single crystal | Li_{0.95}P_{0.05}Ni_{0.5}Mn_{1.45} O_{4.0} | 0.95 | 0.05 | p | / | / |
| Example 32 | 3.4 | 0.061 | 4.01 | 34 | Single crystal | Li_{0.95}Ce_{0.05}Ni_{0.5}Mn_{1.4 5}O_{3.9} | 0.9 5 | 0.0 5 | Ce | / | / |
| Example 33 | 3.3 | 0.062 | 3.92 | 35 | Single crystal | Li_{0.95}Ta_{0.05}Ni_{0.5}Mn_{1.4 5}O_{3.9} | 0.9 5 | 0.0 5 | Ta | / | / |
| Example 34 | 3.3 | 0.058 | 3.88 | 32 | Single crystal | Li_{0.95}Te_{0.01}Ni_{0.5}Mn_{1.4} 903.9 | 0.9 5 | 0.0 1 | Te | / | / |
| Example 35 | 3.4 | 0.057 | 3.97 | 32 | Single crystal | Li_{0.95}Te_{0.02}Ni_{0.5}Mn_{1.4} 8⁰3.9 | 0.9 5 | 0.0 2 | Te | / | / |
| Example 36 | 3.6 | 0.052 | 4.12 | 29 | Single crystal | Li_{0.95}Te_{0.1}Ni_{0.5}Mn_{1.4} O_{4.0} | 0.9 5 | 0.1 | Te | / | / |
| Example 37 | 3.7 | 0.050 | 4.2 | 28 | Single crystal | Li_{0.95}Te_{0.2}Ni_{0.5}Mn_{1.3} O_{4.0} | 0.9 5 | 0.2 | Te | / | / |
| Example 38 | 3.9 | 0.048 | 4.38 | 27 | Single crystal | Li_{0.95}Te_{0.3}Ni_{0.5}Mn_{1.2} O_{4.0} | 0.9 5 | 0.3 | Te | / | / |
| Example 39 | 3.5 | 0.054 | 4.04 | 30 | Single crystal | Li_{0.95}Te_{0.05}Ni_{0.5}Mn_{1.4 5}O_{3.9} | 0.9 5 | 0.0 5 | Te | Lithium phosphate | 3 |
| Example 40 | 3.3 | 0.051 | 3.81 | 42 | Single crystal | Li_{0.95}Te_{0.05}Ni_{0.5}Mn_{1.4 5}O_{3.9} | 0.9 5 | 0.0 5 | Te | Lithium phosphate | 3 |
| Example 41 | 3.5 | 0.054 | 4.04 | 30 | Single crystal | Li_{0.95}Te_{0.05}Ni_{0.5}Mn_{1.4 5}O_{3.9} | 0.9 5 | 0.0 5 | Te | Lithium titanium aluminum phosphate | 3 |
| Example 42 | 3.5 | 0.054 | 4.04 | 30 | Single crystal | Li_{0.95}Te_{0.05}Ni_{0.5}Mn_{1.4 5}O_{3.9} | 0.9 5 | 0.0 5 | Te | Nickel phosphate | 3 |
| Example 43 | 3.5 | 0.054 | 4.04 | 30 | Single crystal | Li_{0.95}Te_{0.05}Ni_{0.5}Mn_{1.4 5}O_{3.9} | 0.9 5 | 0.0 5 | Te | Lithium iron phosphate | 3 |
| Example 44 | 3.5 | 0.054 | 4.04 | 30 | Single crystal | Li_{0.95}Te_{0.05}Ni_{0.5}Mn_{1.4 5}O_{3.9} | 0.9 5 | 0.0 5 | Te | Lithium phosphate | 0. 1 |
| Example 45 | 3.5 | 0.054 | 4.04 | 30 | Single crystal | Li_{0.95}Te_{0.05}Ni_{0.5}Mn_{1.4 5}O_{3.9} | 0.9 5 | 0.0 5 | Te | Lithium phosphate | **0.** 2 |
| Example 46 | 3.5 | 0.054 | 4.04 | 30 | Single crystal | Li_{0.95}Te_{0.05}Ni_{0.5}Mn_{1.4 5}O_{3.9} | 0.9 5 | 0.0 5 | Te | Lithium phosphate | 0. 5 |
| Example 47 | 3.5 | 0.054 | 4.04 | 30 | Single crystal | Li_{0.95}Te_{0.05}Ni_{0.5}Mn_{1.4 5}O_{3.9} | 0.9 5 | 0.0 5 | Te | Lithium phosphate | 10 |
| Example 48 | 3.5 | 0.054 | 4.04 | 30 | Single crystal | Li_{0.95}Te_{0.05}Ni_{0.5}Mn_{1.4 5}O_{3.9} | 0.95 | 0.05 | Te | Lithium phosphate | 20 |
| Example 49 | 3.5 | 0.054 | 4.04 | 30 | Single crystal | Li_{0.95}Te_{0.05}Ni_{0.5}Mn_{1.4 5}O_{3.9} | 0.9 5 | 0.0 5 | Te | Lithium phosphate | 25 |
| Example 50 | 3.1 | 0.097 | 4.07 | 195 | Single crystal | Li_{0.95}Ni_{0.5}Mn_{1.5}O_{3.8} | 0.9 5 | 0 | / | / | / |
| Example 51 | 3.0 | 0.052 | 3.52 | 79 | Single crystal | Li_{0.95}Ni_{0.5}Mn_{1.5}O_{3.9} | 0.9 5 | 0 | / | / | / |
| Example 52 | 2.9 | 0.143 | 4.33 | 156 | Single crystal | Li_{0.95}Ni_{0.5}Mn_{1.5}O_{3.8} | 0.9 5 | 0 | / | / | / |
| Example 53 | 3.0 | 0.192 | 4.92 | 216 | Single crystal | Li_{0.95}Ni_{0.5}Mn_{0.5}O_{3.7} | 0.9 5 | 0 | / | / | / |
| Comparative Example 1 | 2.3 | 0.047 | 2.77 | 26 | Single crystal | Li_{1.1}Ni_{0.5}Mn_{1.5}O₄ | 1.1 | 0 | / | / | / |
| Comparative Example 2 | 4.3 | 0.067 | 4.97 | 37 | Single crystal | Li_{0.75}Ni_{0.5}Mn_{1.5}O_{3.5} | 0.75 | 0 | / | / | / |
| Comparative Example 3 | 2.4 | 0.013 | 2.53 | 7 | Single crystal | Li_{1.02}Ni_{0.5}Mn_{1.5}O₂ | 1.02 | 0 | / | / | / |
| Comparative Example 4 | 2.3 | 0.007 | 2.37 | 0 | Quasi-single crystal | Li_{1.0}Ni_{0.5}Mn_{1.5}O₄ | 1 | 0 | / | / | / |

In addition, performance tests were conducted on the positive electrode active materials and batteries obtained in Examples 1 to 53 and Comparative Examples 1 to 4, and the test results are shown in Table 3 below.

### Testing methods

### (1) X-ray diffraction analysis test

In accordance with JIS K 0131-1996 General Rules for X-ray Diffraction Analysis, the X-ray diffraction pattern of the positive electrode active material was measured using CuKα1 radiation. A Bruker D8 Discover was used. The XRD testing and analysis conditions were: Cu target, scanning voltage of 40 kilovolts (kV), current of 40 milliamperes (mA), and scanning range of 10° to 90°. To reduce the error in pattern fitting, the instrument measurement step size was 0.02°, and the scanning speed was 2°/min.

### (2) Morphology test

The morphology of the positive electrode active material was observed using a scanning electron microscope (model: ZEISS sigma 300) and a transmission electron microscope (model: Hitachi, JEM-2100F).

### (3) High-temperature full-charge storage performance test

The battery was charged at a constant current of 0.3C to a voltage of 4.9 volts (V), then charged at a constant voltage of 4.9 V until the current reached 0.05C, which was defined as one full charge. The battery was discharged at a constant current of 0.33C to a voltage of 3.0 V, which was defined as one full discharge. After full charge and standing for 5 min, the capacity of the full discharge is the discharge capacity of the battery. The discharge capacity divided by the mass of the positive electrode active material in the battery was defined as the discharge specific capacity Cn of the positive electrode active material.

The battery was full charge at 25°C, placed in an oven at 45°C, and stored at a standstill. The battery was taken out every 10 days for full discharge. Next, one full charge-discharge cycle was performed at 25°C, and Cn was extracted. Then, the battery was full charged again and stored continuously in the 45°C environment. The storage was terminated when the discharge capacity Cn decayed to 100 milliampere-hours per gram (mAh/g) (125 mAh/g is the benchmark capacity for the capacity performance of conventional spinel lithium nickel manganese oxide (LNMO), and 80% is the generally accepted end-of-life condition), the storage ended. The total duration of storage at 45°C after full charge was recorded as the high-temperature full-charge storage duration, and this high-temperature full-charge storage duration represented the high-temperature full-charge storage performance of the battery.

**Table 3**

| | Storage life (days) |
|---|---|
| Example 1 | 239 |
| Example 2 | 103 |
| Example 3 | 113 |
| Example 4 | 122 |
| Example 5 | 153 |
| Example 6 | 212 |
| Example 7 | 221 |
| Example 8 | 201 |
| Example 9 | 159 |
| Example 10 | 139 |
| Example 11 | 114 |
| Example 12 | 112 |
| Example 13 | 118 |
| Example 14 | 116 |
| Example 15 | 145 |
| Example 16 | 153 |
| Example 17 | 181 |
| Example 18 | 209 |
| Example 19 | 203 |
| Example 20 | 192 |
| Example 21 | 183 |
| Example 22 | 176 |
| Example 23 | 170 |
| Example 24 | 144 |
| Example 25 | 117 |
| Example 26 | 125 |
| Example 27 | 163 |
| Example 28 | 181 |
| Example 29 | 168 |
| Example 30 | 314 |
| Example 31 | 301 |
| Example 32 | 265 |
| Example 33 | 286 |
| Example 34 | 271 |
| Example 35 | 298 |
| Example 36 | 247 |
| Example 37 | 161 |
| Example 38 | 108 |
| Example 39 | 362 |
| Example 40 | 388 |
| Example 41 | 371 |
| Example 42 | 369 |
| Example 43 | 331 |
| Example 44 | 316 |
| Example 45 | 323 |
| Example 46 | 352 |
| Example 47 | 354 |
| Example 48 | 325 |
| Example 49 | 185 |
| Example 50 | 175 |
| Example 51 | 158 |
| Example 52 | 157 |
| Example 53 | 131 |
| Comparative Example 1 | 57 |
| Comparative Example 2 | 65 |
| Comparative Example 3 | 71 |
| Comparative Example 4 | 42 |

By comparing Examples 1 to 53 with Comparative Examples 1 to 4, it can be seen that when the X-ray diffraction peak intensity I₍₁₁₁₎/I₍₄₀₀₎ of the positive electrode active material in Comparative Examples 1 to 4 was not within the protection scope of the present application, the storage life of the battery was significantly reduced. This indicates that controlling I₍₁₁₁₎/I₍₄₀₀₎ within the corresponding protection scope of the present application is conducive to improving the storage performance of the battery.

The descriptions of the various embodiments above tend to emphasize the differences between the embodiments, and their identical or similar aspects may be referenced to each other. For brevity, they are not repeated herein.

It should be noted that the present application is not limited to the above embodiments. The above embodiments are merely examples, and any embodiments that have substantially the same configuration as the technical solutions of the present application and achieve the same effects are included in the technical scope of the present application. In addition, within the scope not departing from the gist of the present application, various modifications to the embodiments that can be conceived by those skilled in the art, and other forms constructed by combining some constituent elements of the embodiments, are also included in the scope of the present application.

## Claims

1. A positive electrode active material, comprising an active substance, wherein the active substance comprises a lithium nickel manganese oxide, the lithium nickel manganese oxide comprises a spinel phase, an X-ray diffraction pattern of the lithium nickel manganese oxide has a first diffraction peak at a diffraction angle 2θ of 18° to 19° and a second diffraction peak at a diffraction angle 2θ of 44° to 45°, the first diffraction peak corresponds to a crystal plane (111), and the second diffraction peak corresponds to a crystal plane (400);
a peak intensity of the first diffraction peak is I₍₁₁₁₎, a peak intensity of the second diffraction peak is I₍₄₀₀₎, and I₍₁₁₁₎ and I₍₄₀₀₎ satisfy 2.5≤I₍₁₁₁₎/I₍₄₀₀₎≤4; and
the lithium nickel manganese oxide satisfies a chemical formula LiₓM_{y}Ni_{z}Mn_{2-y-z}O₄₋ₖ, wherein 0.8≤x≤1.05, 0≤y≤0.2, 0.3≤z≤0.7, -0.1≤k≤0.5, and M comprises one or more of B, Si, P, S, Nb, Mo, Ru, Te, Ce, Ta, and W.

2. The positive electrode active material according to claim 1, wherein the lithium nickel manganese oxide satisfies 2.8≤I₍₁₁₁₎/I₍₄₀₀₎≤3.8.

3. The positive electrode active material according to claim 1 or 2, wherein the lithium nickel manganese oxide satisfies 3.1≤I₍₁₁₁₎/I₍₄₀₀₎≤3.6.

4. The positive electrode active material according to any one of claims 1 to 3, wherein the lithium nickel manganese oxide satisfies at least one of the following conditions: $0.85 \leq x \leq 1.02 ;$ and $0.01 \leq y \leq 0.2 .$

5. The positive electrode active material according to any one of claims 1 to 4, wherein the lithium nickel manganese oxide satisfies at least one of the following conditions: $0.9 \leq x \leq 0.99 ;$ and $0.02 \leq y \leq 0.1 .$

6. The positive electrode active material according to any one of claims 1 to 5, wherein the lithium nickel manganese oxide comprises a rock salt phase, wherein an X-ray diffraction pattern of the lithium nickel manganese oxide has a third diffraction peak at a diffraction angle 2θ of 43° to 44°, a peak intensity of the third diffraction peak is I_{RS}, and I_{RS} and I₍₄₀₀₎ satisfy 0.01≤I_{RS}/I₍₄₀₀₎≤0.2.

7. The positive electrode active material according to claim 6, wherein I_{RS} and I₍₄₀₀₎ satisfy 0.02≤I_{RS}/I₍₄₀₀₎≤0.1.

8. The positive electrode active material according to claim 6 or 7, wherein I_{RS} and I₍₄₀₀₎ satisfy 0.05≤I_{RS}/I₍₄₀₀₎≤0.1.

9. The positive electrode active material according to any one of claims 6 to 8, wherein the lithium nickel manganese oxide satisfies the following condition: 3.5≤(I₍₁₁₁₎+10×I_{RS})/I₍₄₀₀₎≤4.4.

10. The positive electrode active material according to any one of claims 6 to 9, wherein the lithium nickel manganese oxide satisfies the following condition: 3.6≤(I₍₁₁₁₎+10×I_{RS})/I₍₄₀₀₎≤4.1.

11. The positive electrode active material according to any one of claims 6 to 10, wherein the lithium nickel manganese oxide comprises crystal grains of the spinel phase and crystal grains of the rock salt phase, and the crystal grains of the rock salt phase cover at least part of a surface of the crystal grains of the spinel phase in the form of a rock salt phase layer.

12. The positive electrode active material according to claim 11, wherein a thickness of the rock salt phase layer is 20 nm to 200 nm.

13. The positive electrode active material according to any one of claims 1 to 10, wherein the active substance further comprises a phosphate, a mass percentage of the phosphate in the active substance being m, 0.2%≤m≤20%.

14. The positive electrode active material according to claim 13, satisfying at least one of the following conditions:
(1) m satisfies 0.5%≤m≤10%;
(2) the phosphate is coated on at least part of a surface of the lithium nickel manganese oxide; and
(3) the phosphate comprises at least one of orthophosphates, hydrogen phosphates, dihydrogen phosphates, metaphosphates, pyrophosphates, polyphosphates, hypophosphates, phosphites, monofluorophosphates, difluorophosphates, and trifluorophosphates containing at least one element of Li, Na, K, Mg, Al, Ti, Zr, La, Ta, Nb, Te, Mo, W, Sb, Ni, Mn, Fe, Co, and N.

15. The positive electrode active material according to any one of claims 1 to 14, wherein the active substance comprises particles of the active substance, the particles of the active substance comprise at least one of single crystal grains and quasi-single crystal grains, and the single crystal grains comprise at least one of truncated octahedral grains and spherical grains.

16. The positive electrode active material according to any one of claims 1 to 15, satisfying at least one of the following conditions:
(1) a compaction density P of the positive electrode active material under 6 tons of pressure satisfies P≥3 g/cm³;
(2) a volume average particle diameter Dv50 of the positive electrode active material satisfies 2 µm≤Dv50≤20 µm;
(3) volume average particle diameters Dv50, Dv90, and Dv10 of the positive electrode active material satisfy 0.8≤(Dv90-Dv10)/Dv50≤2;
(4) a specific surface area S of the positive electrode active material satisfies 0<S≤1 m²/g; and
(5) a pH value of the positive electrode active material satisfies 9≤pH≤12.

17. The positive electrode active material according to any one of claims 1 to 16, satisfying at least one of the following conditions:
(1) a compaction density P of the positive electrode active material under 6 tons of pressure satisfies 3 g/cm³≤P≤3.5 g/cm³;
(2) a volume average particle diameter Dv50 of the positive electrode active material satisfies 3 µm≤Dv50≤15 µm;
(3) volume average particle diameters Dv50, Dv90, and Dv10 of the positive electrode active material satisfy 1.0≤(Dv90-Dv10)/Dv50≤1.8;
(4) a specific surface area S of the positive electrode active material satisfies 0<S≤0.7 m²/g; and
(5) a pH value of the positive electrode active material satisfies 10≤pH≤12.

18. A method for preparing a positive electrode active material, comprising:
sintering a mixture comprising a lithium source, a nickel source, and a manganese source to obtain a positive electrode active material;
wherein the positive electrode active material comprises an active substance, the active substance comprises a lithium nickel manganese oxide, the lithium nickel manganese oxide comprises a spinel phase, an X-ray diffraction pattern of the lithium nickel manganese oxide has a first diffraction peak at a diffraction angle 2θ of 18° to 19° and a second diffraction peak at a diffraction angle 2θ of 44° to 45°, the first diffraction peak corresponds to a crystal plane (111), and the second diffraction peak corresponds to a crystal plane (400); a peak intensity of the first diffraction peak is I₍₁₁₁₎, a peak intensity of the second diffraction peak is I₍₄₀₀₎, and I₍₁₁₁₎ and I₍₄₀₀₎ satisfy 2.5≤I₍₁₁₁₎/I₍₄₀₀₎≤4; and the lithium nickel manganese oxide satisfies a chemical formula LiₓM_{y}Ni_{z}Mn_{2-y-z}O₄₋ₖ, wherein 0.8≤x≤1.05, 0≤y≤0.2, 0.3≤z≤0.7, -0.1≤k≤0.5, and M comprises one or more of B, Si, P, S, Nb, Mo, Ru, Te, Ce, Ta, and W.

19. The method according to claim 18, wherein the sintering treatment comprises:
heating the mixture to a first sintering temperature T1, holding at the first sintering temperature T1 for a first preset time t1, and then cooling at a first cooling rate v1 to room temperature to obtain a sintered product.

20. The method according to claim 19, satisfying at least one of the following conditions:
(1) the first sintering temperature T1 satisfies 900°C≤T1≤1500°C and T1≥x×1000°C;
(2) the first preset time t1 satisfies 1 h≤t1≤20 h; and
(3) the first cooling rate v1 satisfies v1≥10°C/min.

21. The method according to claim 19 or 20, satisfying at least one of the following conditions:
(1) the first sintering temperature T1 satisfies 1000°C≤T1≤1300°C;
(2) the first preset time t1 satisfies 2 h≤t1≤15 h; and
(3) the first cooling rate v1 satisfies 10°C/min≤v1≤50°C/min.

22. The method according to any one of claims 18 to 21, satisfying at least one of the following conditions:
(1) the mixture further comprises an M source;
the M source comprises one or more of oxides, nitrate compounds, carbonate compounds, hydroxide compounds, and acetic acid containing element M, the element M comprising one or more of B, Si, P, S, Nb, Mo, Ru, Te, Ce, Ta, and W;
(2) the lithium source comprises one or more of lithium oxide, lithium phosphate, lithium dihydrogen phosphate, lithium acetate, lithium hydroxide, lithium carbonate, and lithium nitrate;
(3) the nickel source comprises one or more of nickel oxide, nickel phosphate, nickel acetate, nickel hydroxide, nickel carbonate, and nickel nitrate; and
(4) the manganese source comprises one or more of manganese oxide, manganese phosphate, manganese acetate, manganese hydroxide, manganese carbonate, and manganese nitrate.

23. The method according to any one of claims 19 to 21, wherein the sintering treatment further comprises:
heating a material comprising the sintered product to a second sintering temperature T2, holding at the second sintering temperature T2 for a second preset time t2, and then cooling at a second cooling rate v2 to room temperature.

24. The method according to claim 23, satisfying at least one of the following conditions:
(1) the second sintering temperature T2 satisfies T1-200°C≤T2≤T1 and T2≥900°C;
(2) the second preset time t2 satisfies 0.5 h≤t2≤5 h;
(3) the second cooling rate v2 satisfies v2≥10°C/min; and
(4) the material further comprises a phosphate, the phosphate comprising at least one of orthophosphates, hydrogen phosphates, dihydrogen phosphates, metaphosphates, pyrophosphates, polyphosphates, hypophosphates, phosphites, monofluorophosphates, difluorophosphates, and trifluorophosphates containing at least one element of Li, Na, K, Mg, Al, Ti, Zr, La, Ta, Nb, Te, Mo, W, Sb, Ni, Mn, Fe, Co, and N.

25. The method according to claim 23 or 24, satisfying at least one of the following conditions:
(1) the second sintering temperature T2 satisfies T1-100°C≤T2≤T1 and T2≥950°C; and
(2) the second cooling rate v2 satisfies 10°C/min≤v2≤50°C/min.

26. A positive electrode sheet, comprising a positive electrode active material layer, the positive electrode active material layer comprising the positive electrode active material according to any one of claims 1 to 17 or the positive electrode active material prepared by the method according to any one of claims 18 to 25.

27. The positive electrode sheet according to claim 26, wherein a compaction density P' of the positive electrode active material layer satisfies P'≥2.9 g/cm³.

28. The positive electrode sheet according to claim 26 or 27, wherein a compaction density P' of the positive electrode active material layer satisfies 3 g/cm³≤P'≤3.6 g/cm³.

29. A secondary battery, comprising the positive electrode sheet according to any one of claims 26 to 28.

30. An electric device, comprising the secondary battery according to claim 29.
